# EUROPÄISCHE PATENTSCHRIFT

(11) **EP 1 340 062 B1**
(45) Veröffentlichungstag und Bekanntmachung des Hinweises auf die Patenterteilung: **24.10.2012**
(21) Anmeldenummer: 01999796.4
(22) Anmeldetag: 07.12.2001
(51) Int. Cl.: G01N 1/42, B01L 7/00, A01N 1/02

(54) **VERFAHREN UND VORRICHTUNG ZUR KRYOSPEICHERUNG**
CRYOSTORAGE METHOD AND DEVICE
PROCEDE ET DISPOSITIF DE CRYOSTOCKAGE

(30) Priorität: 07.12.2000 DE 10060889; 12.09.2001 DE 10144925
(43) Veröffentlichungstag der Anmeldung: 03.09.2003
(60) Teilanmeldung: 10015848.4
(73) Patentinhaber: Fraunhofer-Gesellschaft zur Förderung der angewandten Forschung e.V., 80686 München (DE)
(72) Erfinder: FUHR, Günter, 13187 Berlin (DE); HAGEDORN, Rolf, 13057 Berlin (DE); ZIMMERMANN, Heiko, 66386 St. Ingbert (DE)
(74) Vertreter: Hertz, Oliver
(86) Internationale Anmeldenummer: PCT/EP2001/014400
(87) Internationale Veröffentlichungsnummer: WO 2002/046719

(56) Entgegenhaltungen:
- EP-A- 0 706 825
- DE-A- 19 621 179
- DE-A- 19 752 085
- DE-A- 19 838 232
- DE-A- 19 921 236
- US-A- 5 925 511

## Beschreibung

Die Erfindung betrifft Verfahren zur Kryospeicherung von Proben, insbesondere zur Herstellung, Lagerung und Manipulierung biologischer Proben im kryokonservierten oder aufgetauten Zustand, wie z. B. ein Kryospeicherungsverfahren für biologische Zellen. Die Erfindung betrifft insbesondere Verfahren zum Schreiben und Lesen von Daten. Die Erfindung betrifft weiterhin ein Kryosubstrat zur Kryospeicherung von biologischen Proben, wie z. B. Zellen oder Zellbestandteile. Die Erfindung betrifft auch Anwendungen der Kryokonservierung biologischer Proben.

Die Kryokonservierung ist ein allgemein bekanntes Verfahren zur Haltbarmachung insbesondere biologisch oder medizinisch relevanter Materialen. Diese Materialien umfassen bspw. Gewebe und Organe, Körperflüssigkeiten oder auch einzelne Zellen oder Zellbestandteile. Die Kryokonservierung erfolgt nach bestimmten Prozeduren in Behältern oder auf Substraten, deren Gestalt an das Material oder Probe angepasst ist. Behälter zur Kryokonservierung sind bspw. für Gewebe und Organe (siehe DE-OS 199 22 31, EP-A 0 853 238, DE-OS 197 25 768, DE-OS 199 05 163), für Blutkomponenten (siehe z. B. DE-OS 198 26 350) und für zell- oder tropfenförmige Kryoproben (siehe z. B. US-A-5 275 016, EP-B 0 475 409, DE-OS 199 21 236, EP-B 0 804 073) bekannt.

Ein generelles Anliegen bei der Kryokonservierung biologischer Proben besteht in der Identifizierbarkeit der Proben. Kryokonservierte Proben müssen in Bezug auf ihre Herkunft und Eigenschaften mit hoher Sicherheit identifizierbar sein, ohne dass ein Auftauen erforderlich ist. Bei den makroskopischen Kryoproben ist dies kein Problem, da Organ- oder Blutbehälter mit einer Beschriftung versehen werden können. Das Auffinden der Kryoproben erfolgt in Abhängigkeit vom Ablagesystem der jeweiligen Kryobank.

Bei kleinen Kryoproben in Form von gefrorenen Suspensionstropfen, Zellen, Zellaggregaten oder Zellbestandteilen ist die Identifizierung der Kryoproben erheblich problematischer. Eine Kryoprobe wäre gegenüber der Beschriftung vernachlässigbar klein. Oft besteht ein Interesse an der Kryokonservierung einer Vielzahl mikroskopisch kleiner Proben. Die Lagerung und Identifizierung von kleinen Kryoproben mit Beschriftung wäre unpraktikabel. Des Weiteren liegen die kryokonservierten Zellproben bei herkömmlichen Konservierungstechniken, die auf dem Aufsprühen von Zellsuspensionen auf gekühlte Oberflächen (siehe z. B. EP-B 0 475 409) beruht, in einem ungeordneten Zustand vor. Es können lediglich größere Menge von Einzelproben unspezifisch gemeinsam konserviert werden.

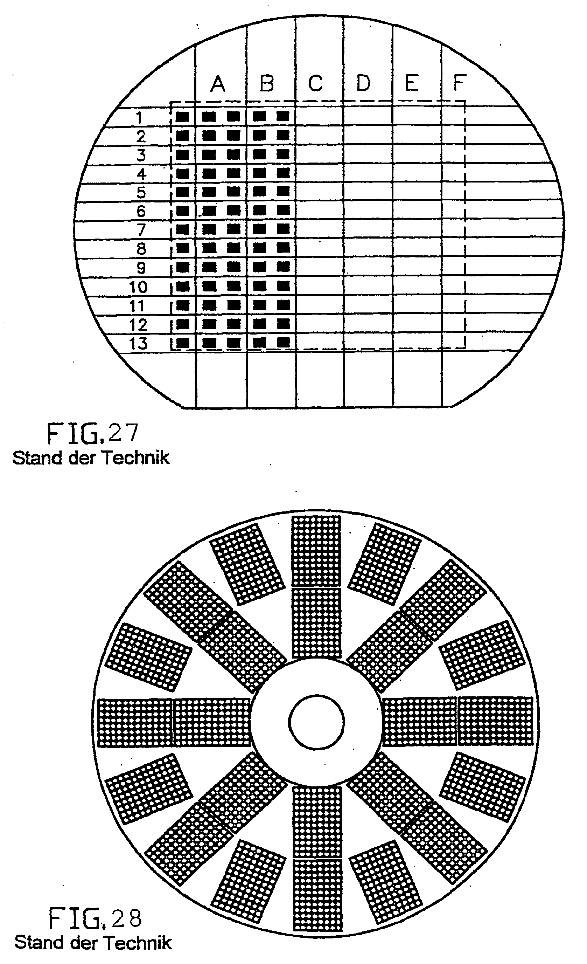

Bei den in EP-B 0 804 073 und DE-OS 199 21 236 beschriebenen Konservierungstechniken ist eine geordnete Ablage und spezifische Bearbeitung selbst kleinster Proben auf Kryosubstraten möglich. Die Probenablage erfolgt bspw. unter Verwendung einer Mikrotropfenschusseinrichtung, die auf der Grundlage bestimmter Zielkoordinaten angesteuert wird. Die Proben befinden sich auf definierten Substratpositionen, an denen auch eine spezifische Vermessung von Probeneigenschaften und Identifizierung der Proben ermöglicht wird. Das Substrat kann mit einer Markierung versehen sein, um die Probenpositionen auf dem Substrat zu definieren. Beispielsweise wird in DE-OS 199 21 236 für die matrixartige Ablage von Kryoproben in geraden Zeilen und Spalten vorgeschlagen, das Substrat mit einer Bezeichnung der Spalten und Zeilen zu versehen. Diese Markierungstechnik ist in Figur 27 (Stand der Technik) illustriert.

Die herkömmliche Markierung von Kryosubstraten gemäß Figur 27 besitzt die folgenden Nachteile. Es wird zwar die Identifizierung von Proben ermöglicht, damit wird aber lediglich eine Positionsinformation gegeben. Der beschränkte Informationsgehalt der Substratmarkierung stellt jedoch ein Problem dar, da neben der Probenidentifizierung auch zusätzliche Daten, z. B. über die Beschaffenheit oder die Vorgeschichte der Probe oder über Messergebnisse verfügbar sein sollen. Diese Daten könnten zwar in einer parallel betriebenen Datenbank gespeichert werden. Der getrennte Betrieb von Kryo- und Datenbanken stellt aber ein erhebliches Risiko für die Sicherheit der Merkmalszuordnung zu den einzelnen Proben dar. Dieses Risiko ist insbesondere bei humanmedizinischen Anwendungen kritisch, da eine Probenverwechslung den Erfolg einer weiteren Verwendung der Kryoprobe vereiteln kann. Außerdem besitzt die Substratmarkierung den Nachteil, dass eine Probenidentifizierung nur im Verbund mit dem Kryosubstrat möglich ist. Wenn eine Probenentnahme erfolgt, wie es bspw. in DE-OS 199 21 236 beschrieben wird, kann nach Trennung vom Kryosubstrat eine Probenidentifizierung nur durch eine aufwendige Messung von Probeneigenschaften im aufgetauten Zustand erfolgen.

Aus DE-OS 197 52 085 ist ein Probenträger für mikroskopische Untersuchungen an einer Vielzahl von Proben bekannt. Der herkömmliche Probenträger wird durch ein in Figur 28 (Stand der Technik) in schematischer Draufsicht gezeigtes Substrat mit einer Vielzahl von Probeaufnahmeräumen gebildet. Das Substrat besitzt bspw. die Form eines Plattenspeichers (z. B. CD). Zwischen einem in der Substratmitte befindlichen Durchgangsloch und den matrixartig angeordneten Probeaufnahmeräumen ist ein Ringbereich gebildet. Aus DE-OS 197 52 085 ist bekannt, diesen Ringbereich zu Speicherung von Probendaten auszugestalten. Der herkömmliche Probenträger besitzt den Nachteil, lediglich zur Aufnahme von flüssigen Proben und nicht für die Kryokonservierung ausgelegt zu sein. Außerdem stellt die Speicherung von Probendaten auf dem Innenring die selben Nachteile dar, wie die o. g. Substratmarkierung. Es können zwar mehr Daten gespeichert werden, die Zuordnung zu den einzelnen Proben ist jedoch nicht fehlerfrei möglich.

Neben den genannten Nachteilen der herkömmlichen Techniken gibt es des Weiteren den folgenden Grund für die bisher gering entwickelte Anwendung der Kryokonservierung insbesondere in der zellulären Biotechnologie. Wenn ein direktes Einfrieren biologischer Proben in einer flüssigen Kühlphase (z. B. Stickstoff) erfolgt, besteht ein Kontaminationsrisiko. Über die Kühlphase können Viren auf die Proben übertragen werden. Um dieses Risiko zu vermeiden, muss der Kontakt mit der flüssigen Phase vermieden oder für eine dichte Abdeckung der Proben gesorgt werden. Dies ist bisher jedoch nicht in praktikabler Weise realisiert worden.

Aus der Labortechnik sind Probenträger, z. B. in Form von Probenbehältern (z.B. EP 0 706 825 A1), Objektträgern oder Mikrotiterplatten bekannt, die mit Datenspeichern ausgestattet sind. Diese herkömmlichen Probenträger sind für eine Kryospeicherung nicht geeignet. Erstens sind sie lediglich für eine Nutzung bei Raumtemperatur oder einer Kühlschranktemperatur oberhalb des Gefrierpunkts von Wasser ausgelegt. Eine Verwendung bei tieferen Temperaturen war bisher nicht vorgesehen. Zweitens sind herkömmliche Probenträger als Substrate für Proben vorgesehen. Auf den Substraten erfolgt beispielsweise eine Behandlung, Manipulierung oder Kultivierung von Proben. Für eine Lagerung oder Speicherung im konservierten Zustand sind die herkömmlichen Probenträger jedoch nicht geeignet. Hierzu werden bisher Behälter zur Kryokonservierung verwendet, wie sie oben genannt sind. Schließlich sind die herkömmlichen Probenträger nicht für eine effektive Probenlagerung und -handhabung geeignet. In der Regel müssen sie manuell transportiert werden, eine Lagerung mit hoher Dichte ist ausgeschlossen.

Die Aufgabe der Erfindung ist es, ein verbessertes Verfahren zur Kryokonservierung bereitzustellen, mit dem die Nachteile der herkömmlichen Techniken überwunden werden, das einen erweiterten Anwendungsbereich besitzt und insbesondere für automatisierte Konservierungsanlagen geeignet ist. Das neue Verfahren zur Kryokonservierung soll insbesondere ermöglichen, dass Probendaten in größerem Umfang und mit erhöhter Datensicherheit (d. h. mit erhöhter Sicherheit der Zuordnung von Probendaten zu bestimmten Proben) den Proben zugeordnet werden. Die Erfindung soll auch eine hochspezifische Datenzuordnung zu einzelnen Kryoproben ermöglichen. Die Aufgabe der Erfindung ist es auch, eine Vorrichtung zur Umsetzung eines derart verbesserten Kryokonservierungsverfahrens anzugeben.

Diese Aufgaben werden mit Verfahren oder Vorrichtungen mit den Merkmalen gemäß den Patentansprüchen 1 und 9 gelöst. Vorteilhafte Ausführungsformen und Anwendungen der Erfindung ergeben sich aus den abhängigen Ansprüchen.

Ein Merkmal der Erfindung ist es, mindestens eine Probe auf einem Substrat anzuordnen und auf dem Substrat eine Speicherung von Probendaten vorzunehmen, die für Merkmale der Kryoprobe charakteristisch sind. Die Speicherung der Probendaten erfolgt positionsspezifisch in einem Probendatenspeicher vorzugsweise an der Ablageposition der jeweiligen Probe. Durch die Ablage von Proben und Probendaten an gemeinsamen oder eng benachbarten oder aneinandergrenzenden Positionen des Substrates werden eine Reihe von Vorteilen erzielt. Die Probendaten sind durch ihre Ablageposition eindeutig den jeweiligen Proben zugeordnet. Eine Verwechslung der Probenzuordnung wird ausgeschlossen. Bei Entnahme von Proben können simultan am Ablageort die zugehörigen Daten abgelesen oder mit dem Speichermedium vom Substrat entfernt, so dass auch nach der Probenentnahme bei der weiteren Verarbeitung die Identifizierung der Probe und die Zuordnung der Probendaten sichergestellt ist. Es kann eine Entnahme von einzelnen Proben bei beliebigen Temperaturen, insbesondere auch im gefrorenen Zustand, erfolgen.

Ein wesentlicher Fortschritt, der mit der Erfindung erzielt wird, besteht darin, dass erstmalig eine Verfahrensweise und geeignete Vorrichtungen bereitgestellt werden, die optimal für eine Speicherung, Konservierung oder Lagerung biologischer Proben über lange Zeiträume (Monate und Jahre) bei tiefen Temperaturen (z. B. unterhalb -50°C) eingerichtet sind. Mit der Erfindung wird für die Verwendung von Datenspeichern ein neuer Anwendungsbereich bei Betriebstemperaturen erschlossen, der vor der Erfindung nicht benutzt wurde.

Anwendungsabhängig können die Probenablage und die Datenspeicherung bei Raumtemperatur mit anschließender Abkühlung zur jeweils erforderlichen Konservierungstemperatur oder auch im gekühlten Zustand erfolgen. Die Erfinder haben überraschenderweise festgestellt, dass sowohl ein Schreiben als auch ein Lesen von Daten in oder aus an sich bekannten Speichermedien (z. B. optische Speicher, magnetische Speicher, elektromagnetische Speicher, FLASH-Speicher) oder in speziell für die Aufgaben der Kryospeicherung ausgelegten Speichermedien selbst bei Konservierungstemperaturen unterhalb des Gefrierpunktes des Wassers möglich sind. Die Probendatensätze sind in allen Phasen eines Kryokonservierungsvorganges zuverlässig lesbar. Die Lesbarkeit von Datenspeichern bei derart tiefen Temperaturen, dass gegebenenfalls ein Beschreiben ausgeschlossen ist, stellt einen von der Erfindern erkannten Vorteil dar, der zur erweiterten Anwendbarkeit der erfindungsgemäßen Kryospeicherung beiträgt.

Besondere Vorteile besitzt die Erfindung bei der Ablage einer Vielzahl von Proben auf einem gemeinsamen Speichersubstrat mit einer positionsspezifischen Speicherung einer Vielzahl von Probendatensätzen. Das Speichersubstrat dient gleichzeitig als Kryosubstrat mit Probenträgern zur Ausnahme, Halterung und Freigabe von Kryoproben und als Datenträger, der wie ein für die Computertechnik bekanntes Speichermedium eine Vielzahl von Daten an den Substratpositionen entsprechend den jeweiligen Probenpositionen speichert. Die Proben werden portionsweise (z. B. tropfenweise) und zueinander isoliert als Zellsuspensionsvolumina (z. B. als Zellsuspensionstropfen) auf oder in die Probenträger des Kryosubstrates aufgebracht. Jedem Probenträger ist ein Probendatenspeicher zugeordnet, in dem zugehörige Daten abgelegt werden. Die gleichzeitige Ablage von Proben und Probendaten erfolgt langzeitstabil und verwechslungssicher. Die erfindungsgemäße Kryokonservierung wird wegen der Analogie zur elektronischen Datenspeicherung hier als Kryospeicherung bezeichnet. Gemäβ der Erfindung umfaβt das Kryosubstrat (auch als Speichersubstrat bezeichet) eine Leiter-platte mit einer Vielzahl von Aufnahmefassungen.

Gemäß einer bevorzugten Ausführungsform der Erfindung erfolgt die Kryospeicherung auf einem Speichersubstrat mit einer Vielzahl von Kryospeicherelementen. Jedes Kryospeicherelement umfasst einen Probenträger und einen Probendatenspeicher, die somit ein integrales Bauteil bilden, dass reversibel oder irreversibel vom Substrat lösbar ist. Der Probenträger und der Probendatenspeicher bilden einen festen Verbund, der zur Kryospeicherung lösbar am Speichersubstrat befestigt ist. Um eine Probe vom Speichersubstrat zu entnehmen, wird das gesamte Kryospeicherelement vom Speichersubstrat gelöst. Ein Speichersubstrat wird gemäß der Erfindung durch einen Grundkörper, der vorzugsweise eine flächige Gestalt besitzt, mit einer Vielzahl von Kryospeicherelementen gebildet. Das Speichersubstrat kann anwendungsabhängig eine vorbestimmte 2- oder 3-dimensionale geometrische Form besitzen. Gemäß bevorzugter Ausführungsformen der Erfindung hat der Grundkörper des Speichersubstrates die Gestalt mindestens einer Leiterplatte, auf der die Kryospeicherelemente wie elektrische Schaltkreise (Chips) aufgesetzt sind.

Es wird auch ein Verfahren zum Betreiben einer Kryobank mit einer Vielzahl von Speichersubstraten beschrieben. Auf mindestens einem Speichersubstrat werden eine Vielzahl von Proben abgelegt, die bspw. zu einem Organismus (Probanden) gehören. Die Proben umfassen bspw. eine oder mehrere spezifische Zellen des Probanden (z. B. Stammzellen, Gewebezellen). Die Ablage der Proben erfolgt zunächst gemeinsam mit den probenspezifischen Daten, insbesondere Daten zur Identifizierung der Art der Proben und des Probanden, des Konservierungszeitpunktes und der zum Zeitpunkt der Konservierung vorliegenden Messdaten. Im Verlauf des Betriebes der Kryobank werden Proben gemeinsam mit den zugehörigen Probendaten für Messzwecke, diagnostische Aufgaben oder therapeutische Verfahren entnommen und/oder weitere Proben oder Probendaten ergänzt. Die Probendaten umfassen allgemein alle Merkmale und Parameter der Proben und des Probenspenders und ggf. Zusatzinformationen zur Datenablage auf dem Speichersubstrat. Ein erfindungsgemäß verwendeter Probendatenspeicher besitzt beispielsweise eine Speicherkapazität von mindestens 4 Megabyte.

Durch die folgenden vorteilhaften Merkmale der erfindungsgemäßen Kryospeicherung werden die Nachteile herkömmlicher planarer oder dreidimensionaler Substrate überwunden. Die Proben (z. B. eingefrorenen Zellsuspensionsvolumina) sind zu jedem Zeitpunkt spezifisch zugänglich. Dies gilt auch für den Tieftemperaturzustand. Es können an definierten Substratpositionen kleinste Probenvolumina angeordnet werden, die charakteristische Dimensionen im mm-Bereich oder darunter, vorzugsweise jedoch typische Größen von 10³ µm³ (10 · 10 · 10 µm³) bis zu einigen 10 nm³ besitzen. Die Proben können bspw. eine oder eine Vielzahl von Zellen (10⁵ bis 10⁶ Zellen), Zellbestandteile, biologisch relevante Objekte (wie z. B. Membranvesikeln, DNA-Materialien, Makromoleküle) und/oder Zellverbände enthalten. Die Proben können mit einer hohen Dichte angeordnet werden, die Kryospeicherung besitzt eine erhöhte Effektivität.

Die Proben können selektiv im tiefgekühlten Zustand des Speichersubstrates entnommen werden, ohne dass die Kühlung der übrigen Proben unterbrochen wird. Zur Probenabnahme und zum Datenauslesen ist kein Auftauen des gesamten Speichersubstrates erforderlich.

Die Probendaten können automatisch computergestützt geschrieben oder gelesen werden. Die Zuordnung von Probendatenspeichern und Probenträgern ist eindeutig. Die Proben werden verwechslungssicher abgelegt. Die Zuordnung entnommener Proben zu den Probendaten und auch zum Speichersubstrat bleibt erhalten, so dass die Historie einer Probe rekapituliert werden kann. Dies stellt einen besonderen Vorteil bei medizinischen Anwendungen der Erfindung dar.

Kryospeicherelemente werden vorzugsweise unter Verwendung tieftemperaturverträglichen Kunststoffmaterials hergestellt, das einerseits den Probenträger und andererseits eine Einbettung für den Probendatenspeicher bildet. Das Kunststoffmaterial kann ohne Veränderung und ohne Schaden wiederholte Temperaturwechsel tolerieren. Es wird vorzugsweise ein Kunststoffmaterial verwendet, dessen Wasseraufnahmefähigkeit < 1 % der Eigenmasse, insbesondere < 0.1 % der Eigenmasse beträgt. Erfindungsgemäße Kryospeicherelemente basieren beispielsweise auf Polyurethan, Polytetrafluorethylen oder Polyethylen. Erfindungsgemäße Speichersubstrate besitzen vorteilhafterweise eine hohe mechanische Stabilität und Langzeithaltbarkeit. Die erfindungsgemäße Kryospeicherung ermöglicht erstmalig eine sichere Ablage von biologischen Proben über Jahrzehnte. Eine Kryobank kann über die gesamte Lebensdauer eines Probanden, z. B. für die Dauer eines Menschenalters, zuverlässig betrieben werden. Das Speichersubstrat besitzt einen relativ einfachen Aufbau, der einen massenhaften Einsatz von Speichersubstraten in Kryobanken ermöglicht.

Die Erfindung besitzt auch Vorteile in Bezug auf das genannte Kontaminationsrisiko. Die erfindungsgemäßen Speichersubstrate ermöglichen eine Reihe von unten erläuterten Maßnamen, mit denen verhindert wird, dass ein flüssiges Kühlmedium direkt mit den Proben in Verbindung kommt. Ein virale Kontamination über die Kühlphase wird vermieden. Es wird auch der Niederschlag von Wasser oder anderen Substanzen auf den Proben ausgeschlossen.

Ein weiterer wichtiger Vorteil erfindungsgemäßer Speichersubstrate besteht darin, dass die abgelegten Proben im kryokonservierten oder aufgetauten Zustand den üblichen Mess- und Analysemethoden (z. B. optische Messungen, mikroskopische Beobachtungen) bei gleichzeitiger Lesbarkeit der Datensätze zugänglich sind. Die Daten in den Probendatenspeichern werden auch bei mehrmaligen Einfrier- oder Auftauvorgängen aufrechterhalten.

Die Kryospeicherung erfolgt bei anwendungsabhängig gewählten Konservierungsbedingungen. Die Temperatur der Kryospeicherung und der zeitliche Ablauf von Temperaturabsenkung oder -steigerungen werden in Abhängigkeit von der Konservierungsaufgabe und dem Material gewählt. Die Konservierungstemperatur liegt im Bereich unterhalb der Raumtemperatur, vorzugsweise unterhalb des Gefrierpunktes von Wasser bei Normaldruck und bei den bevorzugten Langzeitanwendungen unterhalb von -80°C. Die Kryotemperatur wird vorzugsweise durch ein flüssiges Kühlmedium (Stickstoff) oder den Dampf des Kühlmediums eingestellt.

Die Erfindung besitzt den Vorteil, dass kleinste Probenvolumina kryokonserviert werden. Dies ermöglicht schnelle Temperaturänderungen, reproduzierbare Konservierungsbedingungen und eine individuelle Probenhandhabung, -behandlung oder -messung.

Weitere Vorteile und Einzelheiten der Erfindung werden im Folgenden unter Bezug auf die beigefügten Zeichnungen beschrieben. Es zeigen:
- Figur 1: eine schematische Schnittansicht eines Teils eines Speichersubstrates (keine Ausführungsform der Erfindung),
- Figur 2: eine schematische Illustration der Probenentnahme von einem Speichersubstrat gemäß Figur 1,
- Figuren 3 bis 7: schematische Draufsichten auf verschiedenen Gestaltungen von Proben- und Speicheranordnungen auf einem Speichersubstrat,
- Figur 8: eine schematische Schnittansicht eines Teils eines Speichersubstrates (keine Ausführungsform der Erfindung),
- Figur 9: schematische Ansichten verschiedener geometrischer Anordnungen von Kryospeicherelementen,
- Figur 10: eine schematische Schnittansicht eines Teils eines Speichersubstrates (keine Ausführungsform der Erfindung),
- Figur 11: eine Illustration der Entnahme von Kryospeicherelementen aus einem Speichersubstrat (keine Ausführungsform der Erfindung),
- Figur 12: eine schematische Illustration einer folienförmigen Abdeckung an einem Speichersubstrat,
- Figur 13: eine schematische Schnittansicht eines Teils eines Speichersubstrates (keine Ausführungsform der Erfindung),
- Figur 14: schematische Perspektivansichten von Speichersubstraten gemäß einer Ausführungsform der Erfindung,
- Figur 15: eine schematische Perspektivansicht eines Kryospeicherelementes des Speichersubstrates gemäß Figur 14, und
- Figur 16: eine schematische Perspektivansicht einer Abwandlung des Kryospeicherelementes gemäß Figur 15,
- Figuren 17 bis 20: schematische Perspektivansichten erfindungsgemäßer Kryospeicherelemente gemäß weiteren Ausführungsformen der Erfindung,
- Figuren 21 und 22: schematische Illustrationen der Beschickung von Probenträgern und der Entnahme von Proben,
- Figuren 23 bis 26: schematische Perspektivansichten von Speichersubstraten (keine Ausführungsformen der Erfindung), und
- Figuren 27 und 28: Draufsichten herkömmlicher Probenträger (Stand der Technik).

Erfindungsgemäß wird mindestens eine Probe in einem Probenträger auf einem Substrat angeordnet und auf dem Substrat eine Speicherung von Probendaten vorgenommen, die für Merkmale der Kryoprobe charakteristisch sind. Die Speicherung der Probendaten erfolgt positionsspezifisch in einem Probendatenspeicher vorzugsweise an der Ablageposition der jeweiligen Probe. Der Verbund aus einem Probenträger zur Aufnahme einer Kryoprobe und einem Probendatenspeicher zur Ablage zugehöriger Probendaten wird als Kryospeicherelement bezeichnet. Ein erfindungsgemäßes Speichersubstrat wird durch einen Grundkörper, der vorzugsweise eine flächige Gestalt besitzt, mit einer Vielzahl von Kryospeicherelementen gebildet.

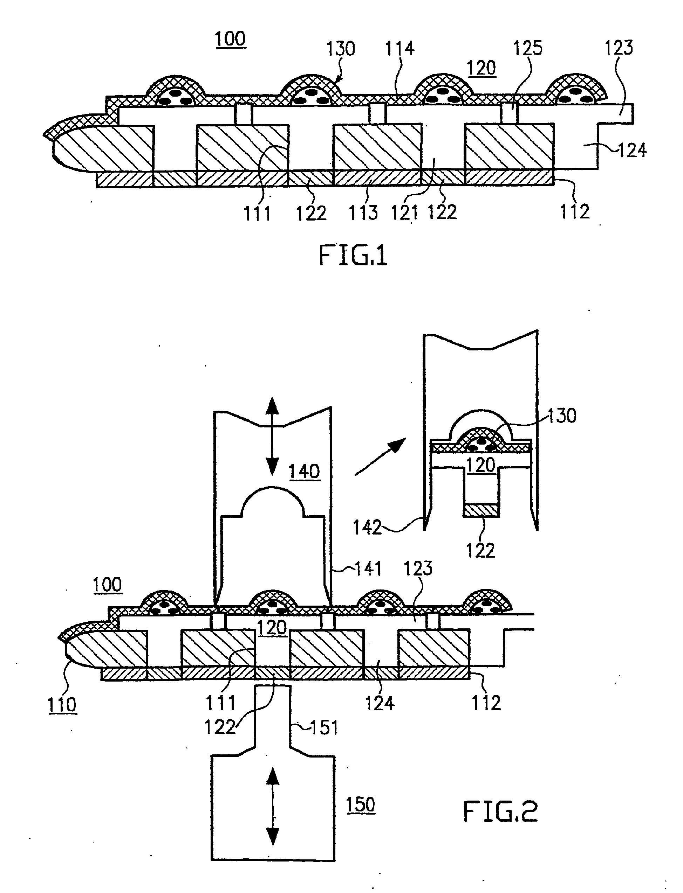

Bei dem in Figur 1 dargestellten Speichersubstrat 100 (keine Ausführungsform der Erfindung) ist ein Grundkörper 110 vorgesehen, der eine Vielzahl von Kryospeicherelementen 120 trägt. Der Grundkörper 110 (ausschnittsweise dargestellt) besitzt typische Dimensionen wie z. B. eine optische lesbare/beschreibbare Speicherplatte (im Folgenden: CD, Durchmesser z. B. rund 12 cm). Zur Aufnahme der Kryospeicherelemente 120 besitzt der Grundkörper 110 Durchtrittöffnungen 111, in denen die Kryospeicherelemente in Art einer Presspassung sitzen. Auf einer Seite des Grundkörpers 110 ist ein schichtförmiges Speichermedium 112 angeordnet. Das Speichermedium 112 ist eine Datenschicht, wie sie von herkömmlichen CD's bekannt und zum Schreiben und Lesen von Daten geeignet ist. Das Speichermedium 112 ist vorzugsweise zum optischen Schreiben ("Brennen") und Lesen der Daten ausgelegt. Es kann aber auch ein magnetisches oder ein topographisches Speichermedium vorgesehen sein. Auf dem Speichermedium 112 ist ggf. eine Schutzschicht vorgesehen (nicht dargestellt).

Das Speichermedium 112 umfasst Schichtbereiche, die auf dem Grundkörper 110 aufliegen und als Basisspeicher 113 dienen, und Bereiche, die zu den Kryospeicherelementen 120 gehören und als Probendatenspeicher 122 dienen. Die Basisspeicher 113 und Probendatenspeicher 122 können zunächst eine geschlossene Schicht des Speichermediums 112 bilden, die nach Probenentnahmen (siehe Figur 2) ggf. unterbrochen wird. Der Basisspeicher 113 enthält vorzugsweise Substratdaten, die sich bspw. auf die Art der Anordnung der Kryospeicherelemente und die Identifizierung des Substrates beziehen. Die Probendatenspeicher 122 enthalten Probendaten (siehe unten).

Die Kryospeicherelemente 120 bestehen jeweils aus einem Probenträger 121 und dem Probendatenspeicher 122. Der Probenträger 121 ist ein Formteil aus Kunststoff mit einer T- oder teller-/pilzförmigen Gestalt. Der Probenträger kann anstelle von Kunststoff aus einem biokompatiblen und inerten Material (z. B. Halbleitermaterial) bestehen. Der Probenträger 121 umfasst eine plattenförmige Probenaufnahme 123 und einen Trägerstift 124. Die innere Form der Durchtrittsöffnungen 111 und die äußere Form des Trägerstifts 124 sind zur Bildung einer Presspassung aufeinander abgestimmt. Zwischen den Rändern der Probenaufnahmen 123 sind Abstände 125 gebildet. Die Abstände 125 verringern das Risiko einer gegenseitigen Kontamination zwischen den Proben. Außerdem vereinfachen sie die Entnahme von Kryospeicherelementen. Mit den Trägerstiften 124 ist jeweils ein Probendatenspeicher 122 fest verbunden.

Auf den Probenaufnahmen 123 befinden sich die Kryoproben 130, insbesondere in Form von gefrorenen Flüssigkeitstropfen. Die Tropfen sind Zellsuspensionen oder auch Referenzproben, z. B. mit Mustern von Kultivierungsmedien, Lösungen von Markierungsfarbstoffen oder Sondenproben. Sondenproben sind Referenzproben, die Substanzen enthalten, die auf eine Änderung kritischer Umgebungsbedingungen empfindlich reagieren. Als Sondenproben können bspw. chemische Verbindungen verwendet werden, die empfindlich gegenüber radioaktiver Strahlung oder unerwünschten Temperaturerhöhungen sind. Eine Kontrolle der Sondenproben ermöglicht eine Überprüfung des Lagerungszustandes des Speichersubstrates in einer Kryobank.

Über den Kryoproben 130 ist eine Abdeckfolie 114 angeordnet, die der Vermeidung von Kontaminationen aus dem Kühlmedium oder aus der sonstigen Umgebung dient. Typische Dimensionen der Probenaufnahmen 123 sind bspw. 0.1 bis 3 mm. Die Gesamtdicke des Speichersubstrates 100 beträgt bspw. rd. 2 mm.

Zur Kryospeicherung von Proben wird ein Speichersubstrat 100 (ohne die Abdeckfolie 114) zunächst mit den Kryoproben und ggf. Referenzproben beschickt. Die Beschickung erfolgt bspw. mit einer Mikrotropfenschusseinrichtung, wie es in EP-B 0 804 073 beschrieben ist. Die Proben werden als Mikrotropfen im gekühlten Zustand des Speichersubstrates 100 gezielt auf die Probenaufnahmen 123 aufgeschossen, wo sie beim Auftreffen festfrieren. Ebenfalls im tiefgekühlten Zustand des Speichersubstrates 100 erfolgt ein Einschreiben z. B. Einbrennen) erster Probendaten in die Probendatenspeicher 122. Nach Beschickung des Substrates erfolgt die Aufbringung der Abdeckfolie 114 und die Einbringung des Speichesubstrates 100 in eine Halterung unter den jeweiligen Kühlbedingungen des verwendeten Kryokonservierungssystems.

In Figur 2 ist die Entnahme von Proben vom Speichersubstrat 100 illustriert. Die Probenentnahme erfolgt durch Abtrennen des jeweiligen Kryospeicherelementes 120 vom Grundkörper 110. Das Abtrennen erfolgt mit einer Stanzeinrichtung 140 in Zusammenwirkung mit einer Stempeleinrichtung 150. Die Stanzeinrichtung besitzt ein hohles Schneidwerkzeug 141, dessen Schneide 142 an die äußere Form der Probenaufnahme 123 angepasst ist. Das Stanzwerkzeug kann bspw. durch eine Hohlkapillare mit einem angeschliffenen Ende gebildet werden. Die Stempeleinrichtung 150 besitzt einen Stempel 151, mit dem der Probedatenspeicher 122 vom übrigen Speichermedium 112 abgetrennt und der Trägerstift 124 aus der Durchtrittsöffnung 111 herausgedrückt werden kann. Am Ende des Stempels 151 ist ggf. auch ein Schneidwerkzeug zur verbesserten Durchtrennung des Speichermediums 112 vorgesehen. Die Stanz- und Stempeleinrichtungen 140, 150 können zur Aufrechterhaltung einer bestimmten Temperatur des Speichersubstrates 100 aktiv oder passiv gekühlt sein.

Figur 2 zeigt, dass mit der Stanzeinrichtung 140 die Probe 130 mit dem Kryospeicher-element 120 entnommen wird, ohne dass andere Probendepots geöffnet werden. Die Probe 130 ist auch nach der Entnahme mit dem Probendatenspeicher 122 verbunden. Es kann eine Übertragung der Probe auf ein anderes Speichersubstrat und/oder eine Messeinrichtung unter Kryobedingungen oder bei erhöhter Temperatur erfolgen. Eine Ergänzung von Probendaten, z. B. in Abhängigkeit von einem Messergebnis, wird am Probendatenspeicher 122 vorgenommen (Datenakkumulation).

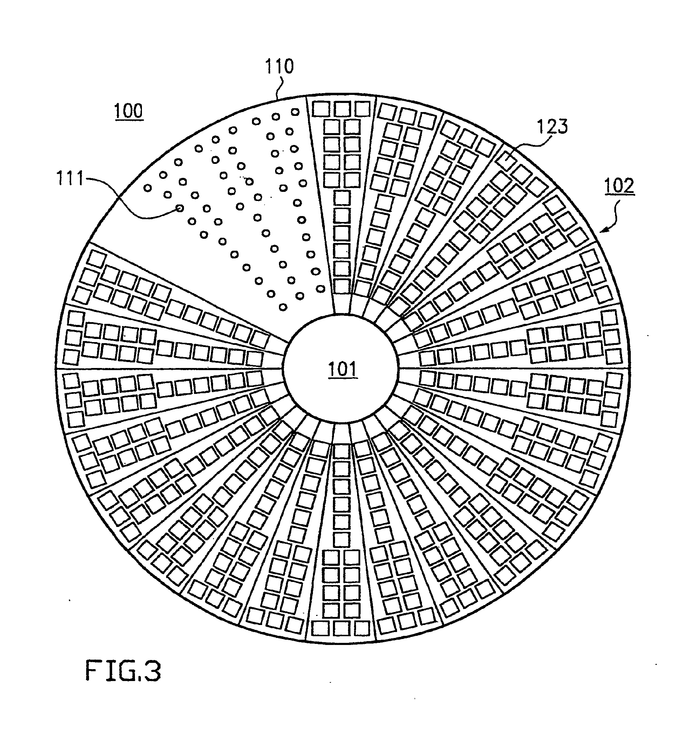

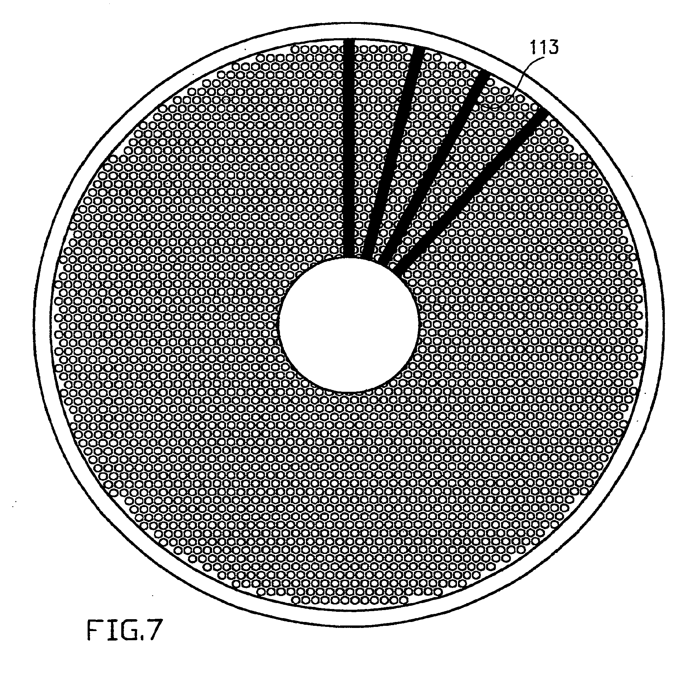

Die Figuren 3 bis 7 illustrieren Speichersubstrate (z. B. gemäß Figur 1, keine Ausführungsform der Erfindung) in schematischer Draufsicht. Ein Speichersubstrat 100 ist wie eine herkömmliche CD geformt und besitzt insbesondere in der Mitte eine Durchtrittsöffnung 101 zur Anbringung des Speichersubstrates in der Kryokonservierungsvorrichtung und/oder einem Lese-/Schreibsystem. Die Probenaufnahmen 123 der Probenträger sind bei dieser Ausführungsform rechteckig gebildet. Sie besitzen typische Flächendimensionen von rd. 0.1 bis 30 mm². Die Probenaufnahmen 123 sind gruppenweise in Sektoren 102 angeordnet. Bei Entnahme von Proben mit den jeweiligen Kryospeicherelementen bleibt der Grundkörper 110 mit den freien Durchtrittsöffnungen 111 zurück.

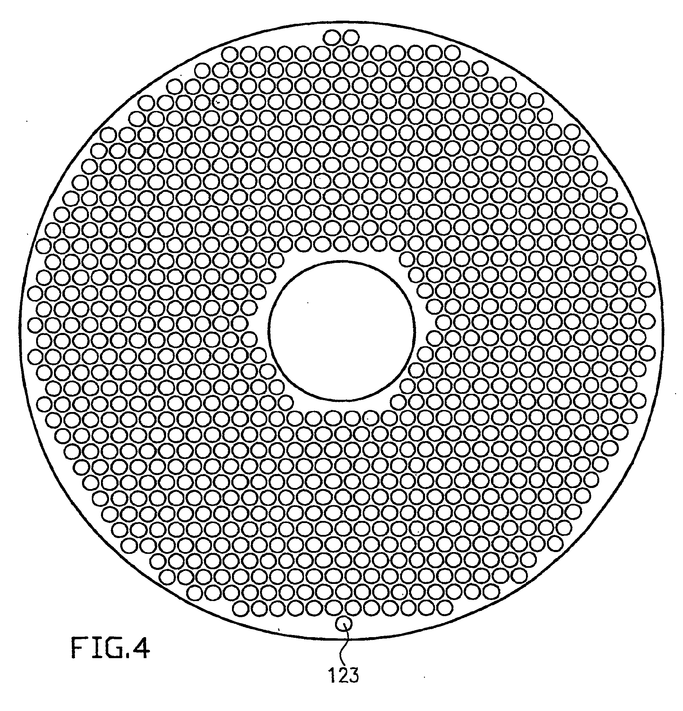

Figur 4 zeigt eine abgewandelte Variante mit kreisförmigen Probenaufnahmen 123. Auf jeder Probenaufnahme 123 kann ein Tropfen mit einem Volumen von einigen mm³ abgelegt werden. Jeder Tropfen kann bis zu 10⁵ Zellen enthalten. Auf dem gesamten Speichersubstrat mit einem Durchmesser von ca. 12 cm können damit bis zu 10⁸ Zellen abgelegt werden.

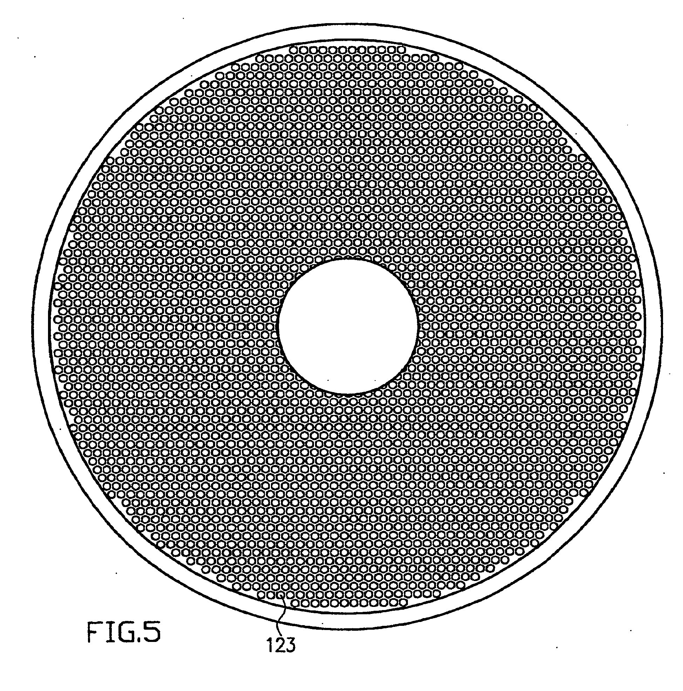

Figur 5 zeigt eine abgewandelte Gestaltung mit kreisförmigen Probenaufnahme 123, die im Vergleich zu Figur 4 kleinere Durchmesser besitzen (z. B. 0.01 bis 1 mm). Die Gesamtzahl der Kryospeicherelemente auf dem Speichersubstrat 100 wird dadurch erhöht. Die Variabilität bei der Probenentnahme steigt.

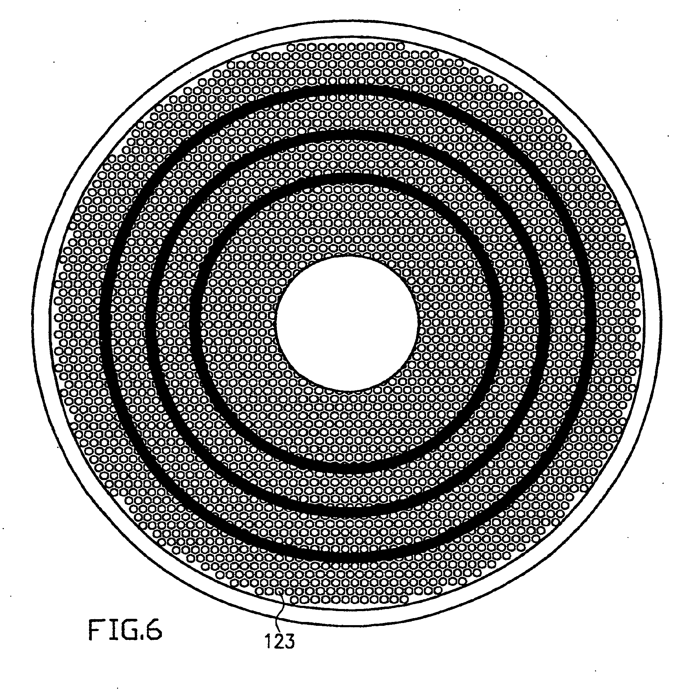

Die in Figur 1 illustrierten Basisspeicher 113 können auch selektiv entsprechend bestimmter Bahnen im Speichermedium angeordnet sein. Dies ist in den Figuren 6 (ringförmige Speicherbahnen) und 7 (strahlförmig ausgerichtete Speicherbahnen) illustriert. Mit den Basisspeichern 113 erfolgt eine zusätzliche Fragmentierung des Speichersubstrates.

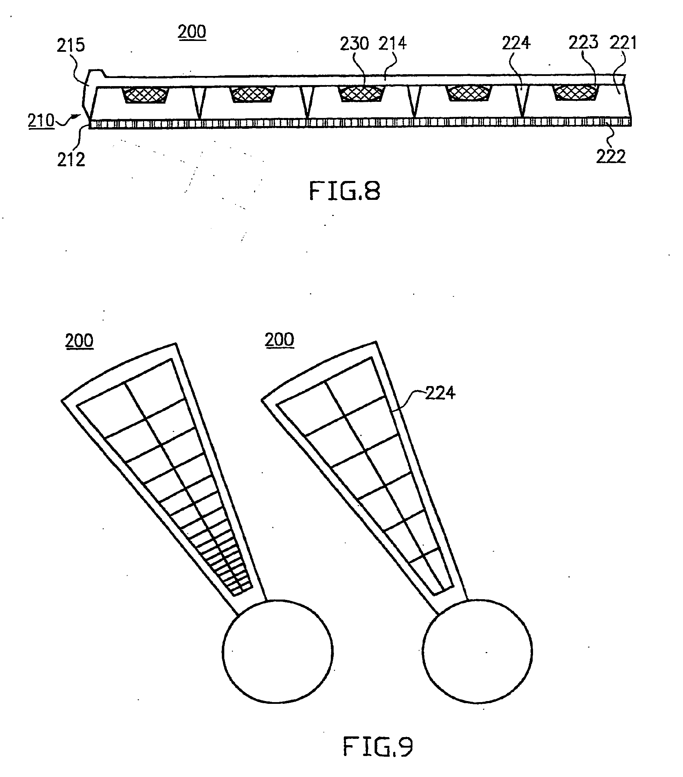

Figur 8 die keine Ausführungsform der Erfindung darstellt, illustriert ausschnittsweise eine abgewandelte Form eines Speichersubstrates 200 mit einem Grundkörper 210, der durch die Probenträger 221 der Kryospeicherelemente gebildet wird. Die Probenträger 221 besitzen auf einer Seite die Probendatenspeicher 222 und auf der entgegengesetzten Seite die Probenaufnahmen 223. Die Probenträger 221 sind Formteile, z. B. aus Kunststoff oder einem Halbleitermaterial, in denen die Probenaufnahmen 223 als Ausnehmungen gebildet sind. Die Probenträger 221 sind über Sollbruchstellen 224 miteinander verbunden. Die Probendatenspeicher 222 bilden eine auf der Unterseite des Grundkörpers 210 angeordnete Schicht des Speichermediums. Auf der Oberseite des Speichersubstrates ist eine Abdeckfolie 214 vorgesehen, mit der die Proben 230 abgedeckt werden. Die Abdeckfolie 214 umgreift den Grundkörper 210 an seiner Außenkante mit einem umlaufenden Vorsprung 215.

Die Verwendung des Speichersubstrates 200, insbesondere die Beschickung und die Datenspeicherung erfolgen nach den oben erläuterten Prinzipien. Zur Probenentnahme werden Kryospeicherelemente 220 jeweils mit einem Träger 221 und einem Probendatenspeicher 222 mit einem geeigneten Werkzeug vom Speichersubstrat 200 getrennt (z. B. herausgebrochen, abgeschnitten oder dergleichen). Anwendungsabhängig sind die Sollbruchstellen 224 mit einer bestimmten Geometrie ausgeführt, wie dies in Figur 9 illustriert ist.

In Figur 9 bezeichnen die weißen Linien den Verlauf der Sollbruchstellen 224. In den jeweils umrahmten schwarzen Bereichen befinden sich die Probenträger insbesondere mit den Probenaufnahmen. Die Probenaufnahmen können innerhalb des Speichersubstrates 200 verschiedene Geometrien besitzen, z. B. nach innen hin enger (linkes Teilbild) oder schmaler werden (rechtes Teilbild).

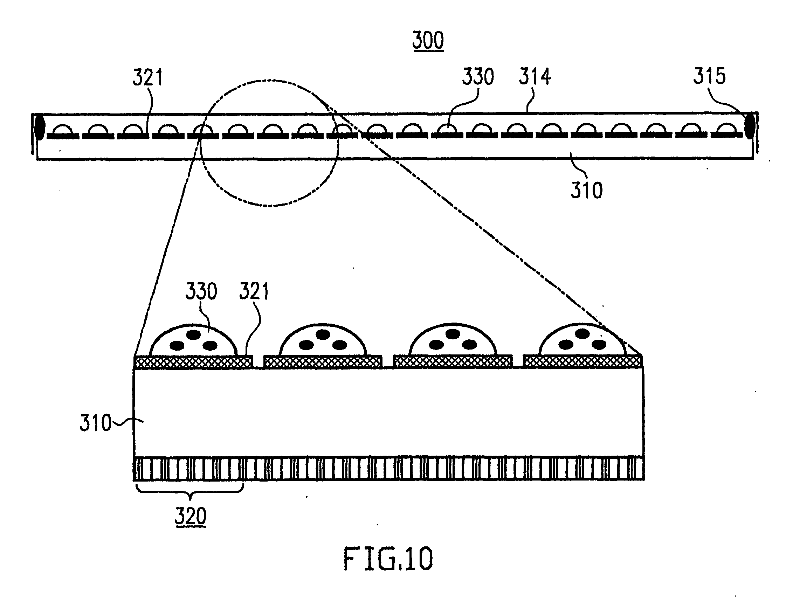

Ein weiteres Speichersubstrat 300 ist in Figur 10 illustriert (keine Ausführungsform der Erfindung). Das Speichersubstrat besitzt einen scheibenförmigen Grundkörper 310 in Form einer ebenen, gleichförmigen Platte. Einfügungen oder Sollbruchstellen sind bei dieser Ausführungsform nicht vorgesehen. Die Kryospeicherelemente 320 bilden bei dieser Gestaltung lediglich eine Einheit, solange die Proben 230 auf dem Speichersubstrat 300 angeordnet sind. Als Probenträger 321 ist für jede Probe eine Probenaufnahmeschicht vorgesehen. Die Probenaufnahmeschicht besteht aus einem Kunststoffmaterial, das eine geringe Haftung zum Grundkörper 310 besitzt (z. B. aus PTFE oder Kautschuk). Die geringe Haftung ist insbesondere im Tieftemperaturbereich gegeben.

Zur Abtrennung einer Probe 330 wird die Probe mit der Probenaufnahmeschicht mit einem geeigneten Werkzeug vom Grundkörper 310 abgetrennt (z. B. abgehoben, abgehobelt, abgeschoben oder abgezogen). Der Probendatenspeicher 322 verbleibt auf der Substratunterseite.

Die Proben 330 sind auch bei dieser Variante mit einer Abdeckung 314 gegen Kontaminierungen geschützt. Die Abdeckung 314 wird durch einen Deckel gebildet, der gegenüber dem Grundkörper 310 über eine Ringdichtung 315 abgedichtet ist.

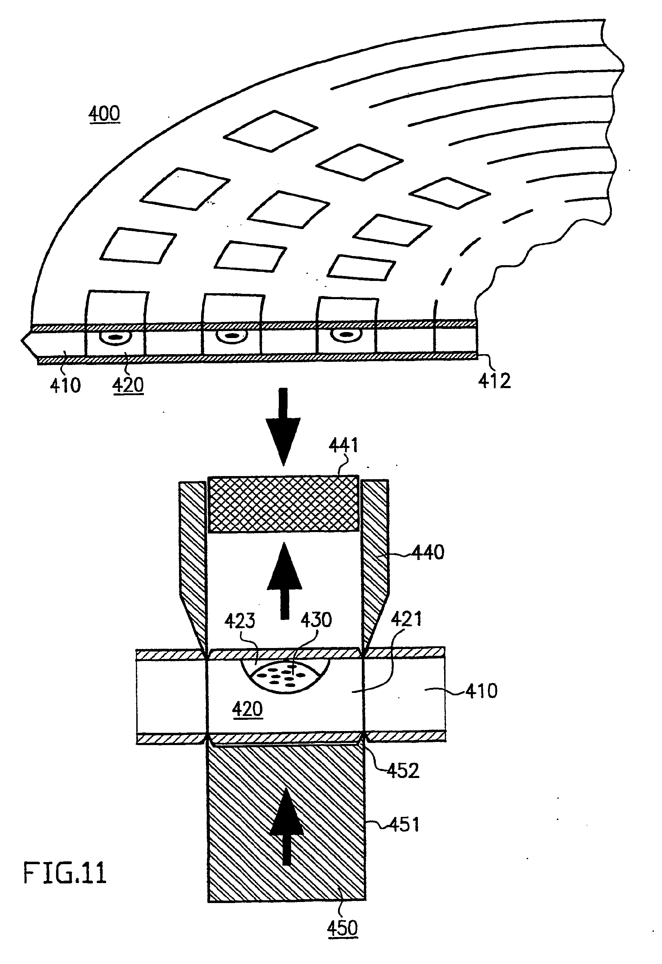

In Figur 11 ist im oberen Teilbild in perspektivischer Ansicht ein Ausschnitt eines Speichersubstrates 400 (keine Ausführungsform der Erfindung) dargestellt. Bei diesem Speichersubstrat sind die Kryospeicherelemente 420 in Form einer Vorperforation oder einer Presspassung im Grundkörper 410 vorgesehen. Der Grundkörper 410 und die Kryospeicherelemente 420 bilden eine ebene Platte, auf deren Unterseite das Speichermedium 412 schichtförmig angeordnet ist. Das Speichermedium 412 (Datenträgerfolie) kann ebenfalls vorperforiert sein und befindet sich auf der Unterseite des Grundkörpers 410 mit der zum optischen Ein- und Auslesen von Daten erforderlichen Planarität.

Im unteren Teilbild von Figur 11 ist das Kryospeicherelement 420 vergrößert dargestellt. Auf der Oberseite des Grundkörpers 410, der hier den Probenträger 421 bildet, ist als Probenaufnahme 423 eine Ausnehmung vorgesehen. In der Probenaufnahme ist die Kryoprobe 430 (z. B. Suspensionstropfen) angeordnet. Mit der Abdeckfolie 414 ist die Probe 430 gegen Kontamination geschützt. Auch an der Abdeckfolie 414 können Perforationen entsprechend der äußeren Form des Kryospeicherelements 420 vorgesehen sein. Allgemein kann die Abdeckung oder Abdeckfolie auch als Speichermedium gebildet sein. Bei Entnahme des Kryospeicherelements 420 aus dem Speichersubstrat 400 mit einem analog zur Illustration in Figur 2 aufgebauten Werkzeug wird die Probe 430 mit dem Probenträger 421, dem Probendatenspeicher 422 und dem Ausschnitt der Abdeckfolie 414 entnommen. Das Speichersubstrat 400 wird in einer Halterung fixiert und mit dem passgenauen Stempel 451 (ggf. mit Schneide 452) und der Stanzeinrichtung 440 vom Grundkörper 410 getrennt. Die Stanzeinrichtung 440 ist mit einem beweglichen Stempel 441 versehen, der nach Abtrennung des Kryospeicherelementes 420 dieses aus der Stanzeinrichtung herausdrückt.

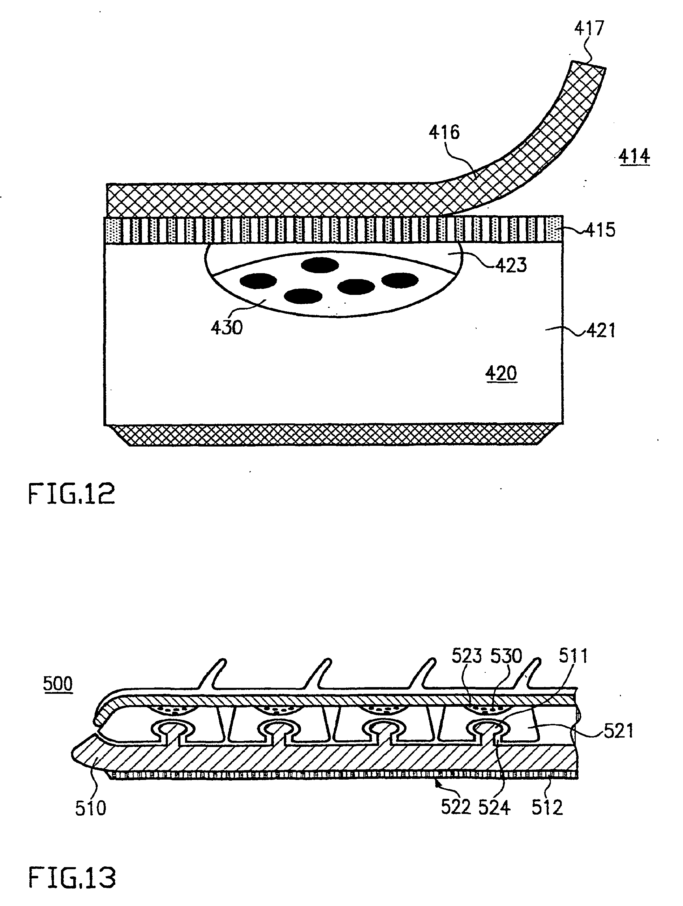

Figur 12 zeigt eine gegenüber Figur 11 abgewandelte Variante am Beispiel eines einzelnen Kryospeicherelementes 420 mit dem Probenträger 421 und der Probenaufnahme 423. Bei dieser Gestaltung ist die Abdeckung 414 durch eine zweischichtige Folie gebildet. Auf dem Probenträger 421 liegt eine poröse Schicht 415 als Abdeckung auf. Darüber befindet sich eine dichte Schicht 416 mit einer aus der Substratebene abstehenden Verlängerung 417. Die Verlängerung 417 kann manuell oder mit einem entsprechenden Werkzeug vom Substrat weggezogen werden. Dabei wird die untere Schicht 415 am Probenträger 421 freigelegt. Diese Prozedur kann im tiefgefrorenen oder auch im aufgetauten Zustand erfolgen. Die Probenaufnahme 423 wird zeitweilig teilweise geöffnet. Es kann ein rascher Austausch der Flüssigkeit in der Probenaufnahme 423 erfolgen. Es können bspw. Kryoprotektive aus der Zellsuspension ausgewaschen werden.

Die Abdeckung 414 kann auch Daten oder Markierungen zur Identifizierung der Probe enthalten. Gemäß abgewandelten Gestaltungen kann ein aus weiteren Schichten gebildeter Aufbau der Abdeckung 414 vorgesehen sein.

Das Prinzip der mehrschichtigen Abdeckung ist auch in Figur 13 am Beispiel einer weiteren Variante gezeigt. Das Speichersubstrat 500 (keine Ausführungsform der Erfindung) umfasst wiederum einen Grundkörper 510 mit pilzförmigen Vorsprüngen 511, auf denen die Probenträger 521 sitzen. Die Probenträger 521 sind Formteile jeweils mit einer Probenaufnahme 523 auf der Oberseite und einer Fixierausnehmung 524 auf der Unterseite. Die Fixierausnehmungen 524 und die Vorsprünge 511 wirken wie Druckknöpfe als lösbare mechanische Verbindungen zusammen. Auf der zu den Probenträgern 521 entgegengesetzten Seite befindet sich als Speichermedium 512 eine Datenträgerschicht, die die Probendatenspeicher 522 bildet, die den jeweiligen Probenträgern 521 zugeordnet sind. Die Abdeckung 514 erfolgt nach dem Doppelschichtprinzip, das in Figur 12 illustriert ist.

Zur Entnahme eines Probenträgers 521 im gefrorenen Zustand des Speichersubstrates 500 wird ein hobel- oder keilförmiges Werkzeug unter den Probenträger 521 geschoben. Mit dem Werkzeug wird die Verbindung zwischen dem jeweiligen Vorsprung 511 und der Fixierausnehmung 524 gelöst. Die Probe wird damit mit dem Probenträger 521 und Teilen der Abdeckung 514 vom Speichersubstrat 500 abgetrennt. Auch bei dieser Variante geht bei der Abtrennung die Verbindung zum Probendatenspeicher 522 verloren. Allerdings können Probendaten auch im entsprechenden Teil der Abdeckung 514 vorgesehen sein.

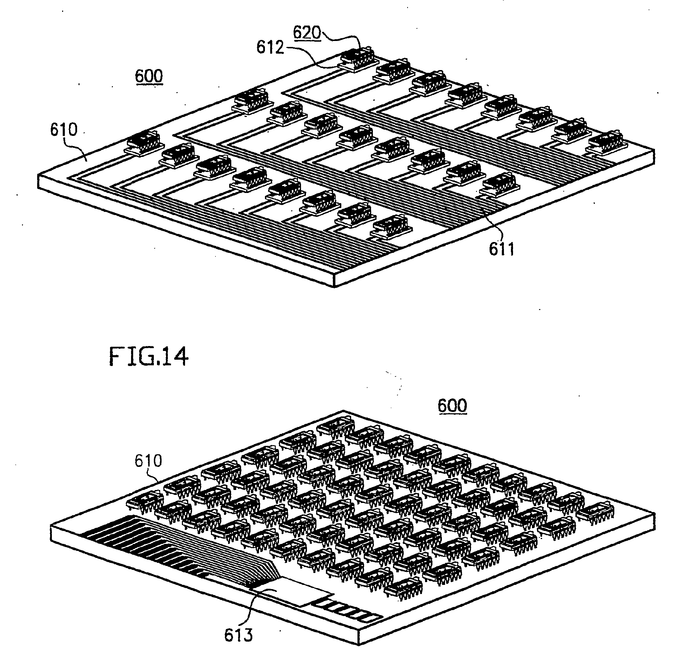

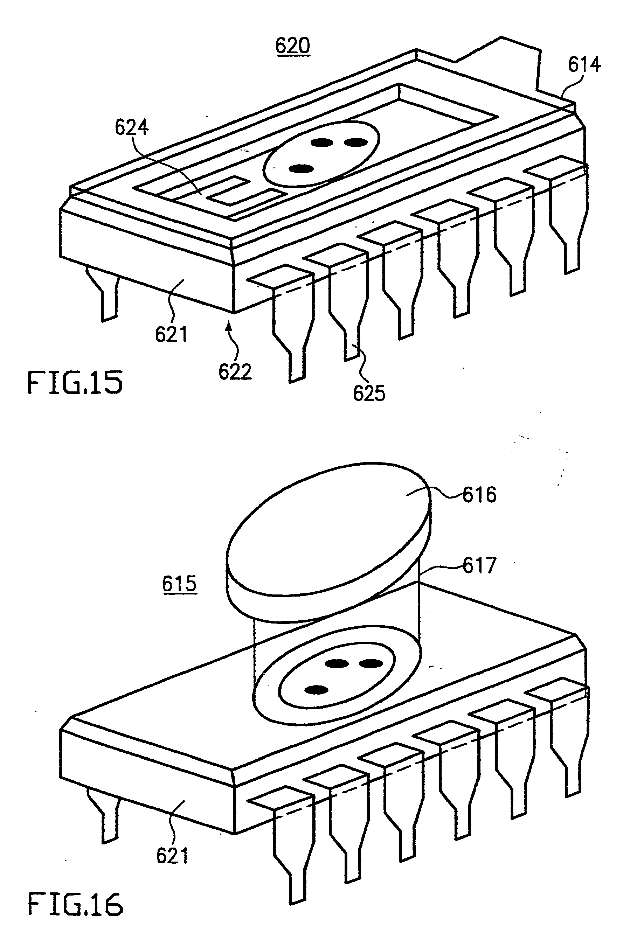

Die in den Figuren 14 bis 26 dargestellten Ausführungsformen der Erfindung zeichnen sich dadurch aus, dass das Speichersubstrat 600 durch mindestens eine Leiterplatte 610 gebildet wird, die dem Grundkörper entspricht und auf die ein oder mehrere Kryospeicherelemente 620 wie elektrische Schaltkreise (Chips) aufgesetzt sind. Die Leiterplatte 610 trägt elektrische (Leiterbahnen) oder optische (Lichtleiterfasern) Verbindungen 611, die jeweils eine Aufnahmefassung 612 zur Aufnahme von einem Kryospeicherelement mit einer externen (nicht dargestellten) Steuereinrichtung verbinden. Die Aufnahmefassung entspricht im Wesentlichen dem Sockel einer herkömmlichen Schaltkreisfassung, in dem die Kontakte des Kryospeicherelements (siehe z. B. Figur 15) eingesetzt werden. An den Aufnahmefassungen 612 können zusätzlich jeweils Schaltkreise zur Signalanpassung, Signalumsetzung oder Detektion der auf den Verbindungsleitungen 611 oder von auf optischem Wege strahlend gelieferten Datensignalen vorgesehen sein.

Die Verbindungsleitungen 611 können auf der Oberseite der Leiterplatte 610 mit den Aufnahmefassungen 612 (oberes Teilbild von Figur 14) oder auf der entgegengesetzten Seite (unteres Teilbild von Figur 14) vorgesehen sein. Im letzteren Fall könne die Aufnahmefassungen 612 dichter angeordnet werden. Das untere Teilbild von Figur 14 zeigt ferner, dass auf der Leiterplatte 610 auch ein Rechnerschaltkreis 613 zur Ansteuerung der Kryospeicherelemente, ggf. mit einem gesonderten RAM-Speicher, vorgesehen sein kann.

Jede Aufnahmefassung 612 ist zur Aufnahme eines Kryospeicherelementes 620 eingerichtet. Jedes Kryospeicherelement 620 umfasst analog zu den oben erläuterten Funktionen einen Probenträger 621, der mit dem Probendatenspeicher 622 verbunden ist. Gemäß einer besonderes vorteilhaften Ausführungsform der Erfindung wird das Kryospeicherelement durch einen an sich bekannten integrierten Schaltkreis (z. B. Speicherbaustein) gebildet. Der Schaltkreis enthält als Probendatenspeicher 622 mindestens einen RAM-Speicher. Das Kryospeicherelement 620 kann auch einen kompletten Rechnerschaltkreis enthalten, mit dem die Funktion des Kryospeicherelements verwaltet wird und über den das Kryospeicherelement nach außen kommuniziert. Der Probenträger 621 ist vorzugsweise in oder in Verbindung mit der Kunststoffabdeckung oder Verkapselung des integrierten Schaltkreises gebildet.

Die Probenaufnahme 623 ist z. B. gemäß Fig. 15 eine Ausnehmung in der Kunststoffabdeckung. Bei einem herkömmlichen Chip mit einer Größe von 7 · 14 mm kann die Probenaufnahme 623 eine Grundfläche von ca. 4 · 10 mm bei einer Tiefe von 1 mm besitzen. Bei diesen Maßen können im Kryospeicherelement 620 bis zu fünf Millionen Zellen untergebracht werden.

Auf dem Boden der Probenaufnahme 623 können zusätzliche Steuereinrichtungen zur Manipulierung der Probe Sensor- und/oder Anzeigeeinrichtungen 624 vorgesehen sein. Die Steuereinrichtungen umfassen ggf. Kühl- und Heizelemente, z. B. Peltier-Elemente, Widerstandsheizelemente, zur gesteuerten Abkühlung oder Erwärmung der Probe oder Materialien mit erhöhter Wärmekapazität zur Reduzierung der Wärmebelastung der Probe während eines Chiptransportes. Als Anzeigeeinrichtung kann eine Lichtquelle vorgesehen sein, die bspw. einen bestimmten Zustand des Kryospeicherelements 620 bzw. der Probe signalisiert oder die als Messlichtquelle für Messungen an der Probe 630 dient. Zusätzlich ist das Kryospeicherelement 620 mit einer Abdeckung 614 versehen, die die Probe von Kontamination, Verdunstung und Sublimation schützt. Die Abdeckung 614 ist bspw. eine Plastikkappe, eine aufgeschweißte Folie oder ein anderes schichtförmiges Bauteil, das eine dichte, lösbare Verbindung mit dem Probenträger 621 eingeht.

Der Probenträger 621 dient auch als Führung für die Kontaktfüße 625 des Kryospeicherelements. Die Kontaktfüße sind insbesondere mit dem Probendatenspeicher 622 und ggf. den Steuer- und Anzeigeeinrichtungen 624 verbunden.

Im Gegensatz zu den aus der zellulären Biotechnologie bekannten Diagnosechips besteht beim Kryospeicherelement 620 zwischen der Probe 630 und dem Probendatenspeicher 622, den Steuer- und/oder Anzeigeeinrichtungen 624 keine Verbindung, die auf eine Erfassung elektrischer Parameter der in der Probe eingefrorenen Zellen gerichtet ist.

Die Abdeckung 614 gemäß Figur 15 kann auch durch einen Kryobehälter 615 gemäß Figur 16 ersetzt werden. Mit dem Kryobehälter 615 wird die Oberseite des Probenträgers 621 als Gefäß gebildet, das analog zu einem herkömmlichen Kryogefäß aufgebaut ist. Es kann insbesondere ein Deckel 616 mit einer abgedichteten Schraubverbindung zum zylinderförmigen Behälterkörper 617 vorgesehen sein. Der Kryobehälter 615 besteht aus einem kälteresistenten Kunststoffmaterial. Die in Figur 16 dargestellte Ausführungsform der Erfindung besitzt den vor Vorteil, dass der Kryobehälter 615 auch manuell, z. B. durch Pipettieren, beschickt werden kann.

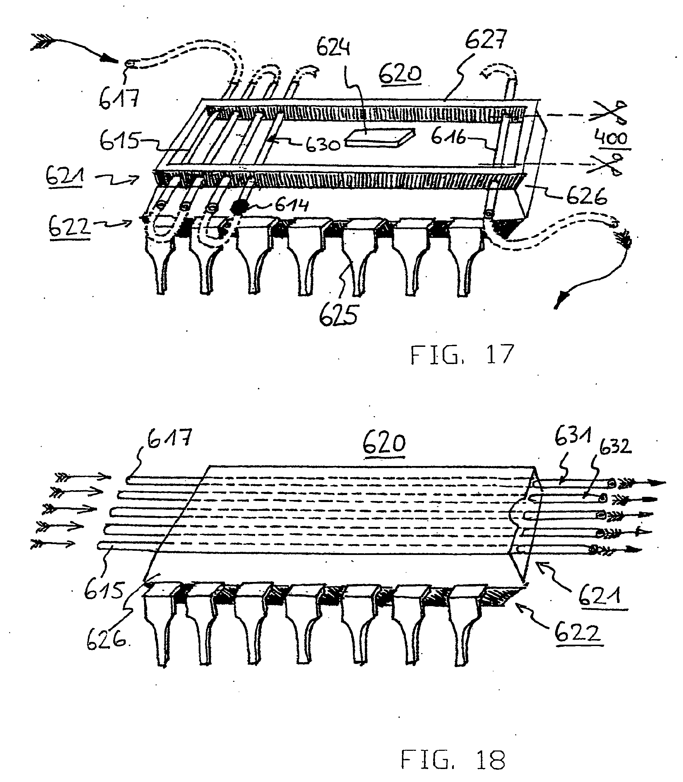

Einzelheiten weiterer Ausführungsformen erfindungsgemäßer Kryospeicherelemente 620 sind in den Figuren 17 bis 22 gezeigt. Das Kryospeicherelement 620 gemäß Fig. 17 umfasst einen Probenträger 621 und einen Probendatenspeicher 622. Der Probendatenspeicher 622 ist wie ein an sich bekannter elektronischer Speicherchip mit Kontaktelektroden 625 und einer Verkapselung 626 aufgebaut, in der ein Speicherschaltkreis und ggf. ein Rechnerschaltkreis angeordnet sind. Die Verkapselung 626 besteht typischerweise aus einem Kunststoffmaterial.

Der Probenträger 621 ist auf der Oberseite der Verkapselung 626 befestigt oder als Teil der Verkapselung 626 gebildet. Der Probenträger 621 besteht aus einem Kunststoffrahmen 627, in den zur Probenaufnahme mindestens ein Kryobehälter 615 integriert ist. Der Kunststoffrahmen 627 ist beispielsweise ein Spritzgussteil mit einer Größe entsprechend der Oberfläche der Verkapselung 626. Die seitlichen Rahmenteile sind mit Bohrungen versehen, in denen die Kryobehälter 615 angeordnet sind.

Jeder Kryobehälter 615 bildet mindestens eine langgestreckte Probenkammer. Die mindestens eine Probenkammer besitzt eine langgestreckte Form derart, dass der Innenquerschnitt wesentlich kleiner als ihre Längsausdehnung ist. Als Probenkammern sind beispielsweise Schläuche, Hohlnadeln, Kapillaren oder dgl. vorgesehen. Der Innendurchmesser einer Probenkammer liegt beispielsweise im Bereich von 5 µm bis 4 mm. Die Länge kann beispielsweise im Bereich von 0.5 cm bis 10 cm gewählt sein. Der Quotient aus Querschnittsdurchmesser und Länge einer Probenkammer ist vorzugsweise kleiner als 1/10. Die Bereitstellung von mindestens einem Kryobehälter 615 in Rohr- oder Schlauchform besitzt die Vorteile einer schnellen Beschickung oder Leerung der Probenkammern, einer hohen Miniaturisierbarkeit und einer hohen Einfriergeschwindigkeit.

Bei der in Fig. 17 illustrierten Ausführungsform der Erfindung ist zunächst ein Kryobehälter 615 durch einen mäanderförmig in den Rahmen 627 eingelegten Schlauch (teilweise dargestellt) gebildet. Nach Beschickung des Kryobehälters 615 über die Schlauchenden (siehe Pfeile) können die gestrichelt eingezeichneten Teile des Schlauches abgeschnitten werden, so dass die durchgezogen gezeichneten Abschnitte als getrennte Kryobehälter (z. B. 616) zurückbleiben. Alle Kryobehälter.615 sind einheitlich mit einer gemeinsamen Probe 630 beschickt, die vorteilhafterweise in Teilproben unterteilt ist. Mit einer mechanischen Trenneinrichtung 400 können die Teilproben (z. B. 616) vom Kryoelement 620 im gefrorenen oder im aufgetauten Zustand abgetrennt werden, ohne dass die übrigen Teilproben beeinflusst werden.

Auf der Oberfläche der Verkapselung 626 und/oder am Rahmen 627 der Probenaufnahme 623 können zusätzliche Steuereinrichtungen zur Manipulierung der Probe und/oder Sensor- und/oder Anzeigeeinrichtungen 624 vorgesehen sein. Die Steuereinrichtungen umfassen ggf. Kühl- und Heizelemente, z. B. Peltier-Elemente, Widerstandsheizelemente oder dgl. Sie dienen der gesteuerten Abkühlung oder Erwärmung der Probe oder Materialien mit erhöhter Wärmekapazität zur Reduzierung der Wärmebelastung der Probe, z. B. während eines Chiptransportes. Die Sensor- und/oder Anzeigeeinrichtungen können eine Lichtquelle aufweisen, die bspw. einen bestimmten Zustand des Kryospeicherelements 620 bzw. der Probe signalisiert oder als Messlichtquelle für Messungen an der Probe 630 dient.

Zusätzlich kann jedes Ende eines Kryobehälters 615 mit einer Abdeckung 614 versehen sein, die die Probe vor Kontamination, Verdunstung und Sublimation schützt. Die Abdeckung 614 ist bspw. eine Plastikkappe, eine aufgeschweißte Folie oder ein anderes Bauteil, das eine dichte Verbindung mit den Enden des jeweiligen Kryobehälters 615 eingeht. Ist als Kryobehälter ein Schlauch vorgesehen, so kann die Abdeckung auch durch einen Teil des Schlauches selbst gebildet sein, indem dieser an seinen Enden zugeklemmt wird.

Anstelle eines durchgehenden und ggf. zugeschnittenen Schlauches gemäß Fig. 17 können als Probenaufnahme 623 auch eine Vielzahl rohrförmiger Kryobehälter 615 aus einem starren Material vorgesehen sein, die quer (Fig. 17) oder parallel (Fig. 18) zur Längsausrichtung des Kryoelements 620 ausgerichtet sind. Bei der Ausführungsform gemäß Fig. 18 sind beispielsweise 5 Kryobehälter 615 in die Verkapselung 626 integriert (eingeschlossen). Dies kann durch Eingießen der Kryobehälter 615 in das Verkapselungsmaterial oder ein Aufkleben erfolgen. Die Kryobehälter 615 werden durch Hohlnadeln oder Kapillaren gebildet.

Die Beschickung eines Kryobehälters 615 erfolgt, indem an ein Ende ein Unterdruck angelegt und über das entgegengesetzte Einlassende 617 die Kryoprobe aufgenommen wird. Anstelle der Ausübung des Unterdrucks kann auch eine Probenaufnahme unter Wirkung von Kapillarkräften im Innern des Kryobehälters 615 vorgesehen sein. Insbesondere bei der Gestaltung gemäß Fig. 18 können in die einzelnen Kryobehälter 615 gleiche oder verschiedene Kryoproben 631, 632, ... aufgenommen werden. Die Kryobehälter 615 sind vorzugsweise derart voneinander beabstandet, dass die Einlassenden 617 entsprechend dem Format einer Mikro- oder Nanotiterplatte ausgerichtet sind.

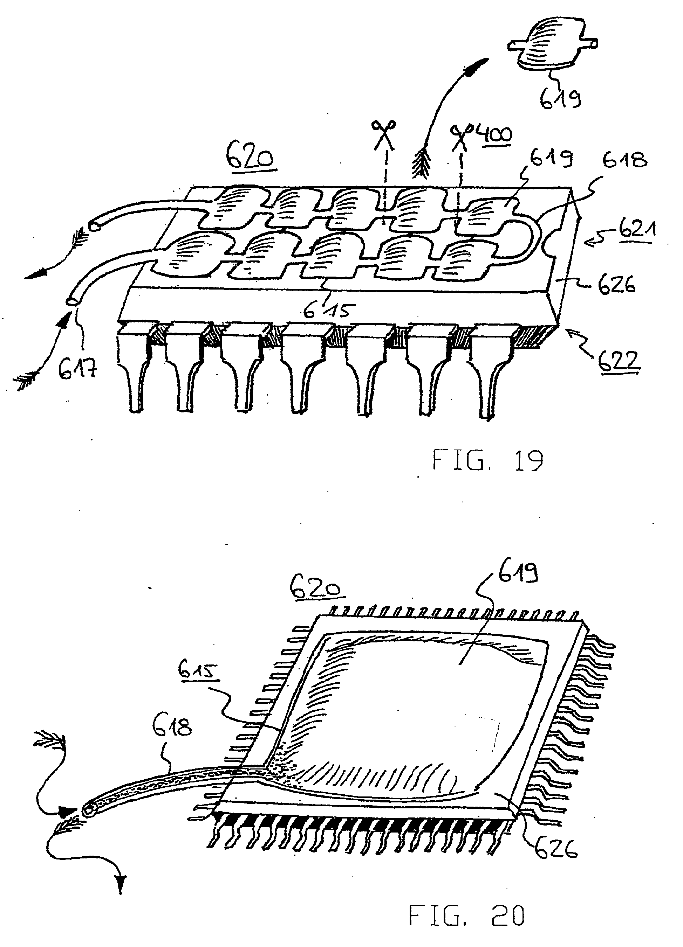

Gemäß einer alternativen, in Fig. 19 illustrierten Ausführungsform des erfindungsgemäßen Kryoelements 620 wird der Kryobehälter 615 des Probenträgers 622 durch einen Schlauch gebildet, dessen Durchmesser in Längsrichtung des Schlauches veränderlich ist. Es wechseln sich Abschnitte 618 mit einem geringen Durchmesser und Teilkammern 619 ab, in denen der Schlauch erheblich verbreitert ist. Der Kryobehälter 615 umfasst eine Vielzahl von Teilkammern 619, die vorteilhafterweise mit einer mechanischen Trenneinrichtung 400 vom Kryoelement 620 abgetrennt werden können. Der Kryobehälter ist auf der Verkapselung 626 des Probendatenspeichers 622 befestigt (z. B. aufgeklebt oder teilweise eingegossen). Die Beschickung des Kryobehälters 615 erfolgt unter Ausübung eines Unterdruckes derart, dass über das Einlassende 617 die suspendierte Kryoprobe in den Kryobehälter 615 eingesogen wird.

Gemäß Fig. 20 kann der Kryobehälter 615 auch aus einem Schlauch gebildet sein, der nur eine Teilkammer 619 aufweist, die wie dargestellt über einen Schlauchabschnitt 618 oder alternativ über mehrere Schlauchabschnitte beschickt oder entleert wird. Die Teilkammer 619 gemäß Fig. 20 ist beispielsweise aus einem Folienmaterial gebildet, dass auf die Verkapselung 626 aufgeklebt ist.

Im Gegensatz zu den aus der zellulären Biotechnologie bekannten Diagnosechips besteht beim Kryospeicherelement 620 zwischen der Probe 630 einerseits und dem Probendatenspeicher 622 und/oder den Steuer-, Sensor und/oder Anzeigeeinrichtungen 624 andererseits keine Verbindung, die auf eine Erfassung elektrischer Parameter der in der Probe eingefrorenen Zellen gerichtet ist.

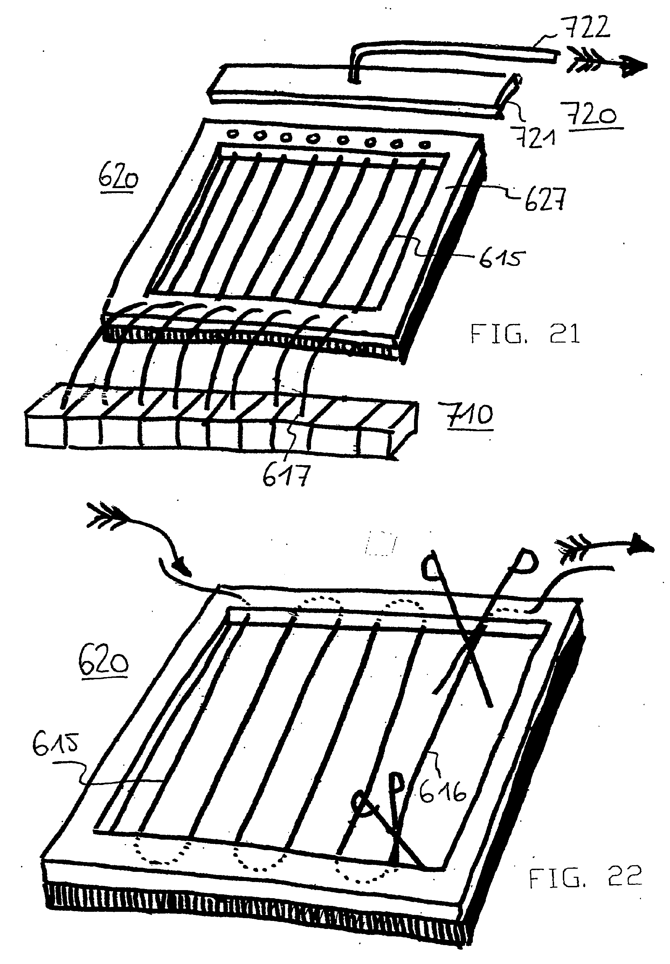

In den Figuren 21 und 22 sind weitere Einzelheiten der Beschickung von und der Probenentnahme aus Kryoelementen 620 illustriert. Die Beschickung erfolgt gemäß Fig. 21 beispielsweise mit einer Ladeeinrichtung, die einerseits eine Vielzahl von Probenreservoiren 710 und andererseits eine Druckeinrichtung 720 aufweist. Das Kryospeicherelement 620 umfasst analog zu der in Fig. 17 gezeigten Ausführungsform einen rahmenförmigen Probenträger 621, an dem eine Vielzahl von Kryobehältern 615 in Form von Kapillaren oder Schläuchen angeordnet sind, deren Einlassenden 617 in die Probenreservoire 710 ragen. Die Probenreservoire 710 sind beispielsweise Vorratsbehälter, in denen sich Proben nach der Gewinnung von einem Probanden befinden. Die Druckeinrichtung 720 umfasst einen Druckaufsatz 721, der druckdicht auf die entgegengesetzten Enden der Kryobehälter 615 aufsetzbar ist, und eine Anschlussleitung 722, über die alle Kryobehälter 615 mit einem Unterdruck beaufschlagbar sind. Die Enden der Kryobehälter 615 sind vorzugsweise zur gemeinsamen Aufnahme des Druckaufsatzes 721 eingerichtet an einem Rahmenteil angebracht. Sie können beispielsweise in der Oberfläche des Rahmens 627 münden. Unter der Wirkung des Unterdruckes werden Proben 630 in die Kryobehälter 615 gesogen.

Nach der Beschickung des Probenträgers 621 wird das Kryospeicherelement 620 von der Ladeeinrichtung getrennt. Die Einlassenden 617 werden ggf. bis zum Rahmen 627 gekürzt. Das Kryospeicherelement 620 wird auf ein Speichersubstrat 610 (siehe Fig. 14) aufgesetzt und mit diesem in eine Umgebung mit reduzierter Temperatur, z. B. ein Kryogefäß in einer Kryobank überführt.

In Fig. 22 ist eine Möglichkeit der Probenentnahme von einem Kryospeicherelement 620 mit einem mäanderförmig geführten Kryobehälter 615 illustriert. Die Teilproben 616 werden mit einer mechanischen Trenneinrichtung 400, z. B. einer Schneideinrichtung, abgetrennt. Dies kann vorteilhafterweise im Zustand reduzierter Temperatur erfolgen, so dass die übrige Probe unverändert bleibt.

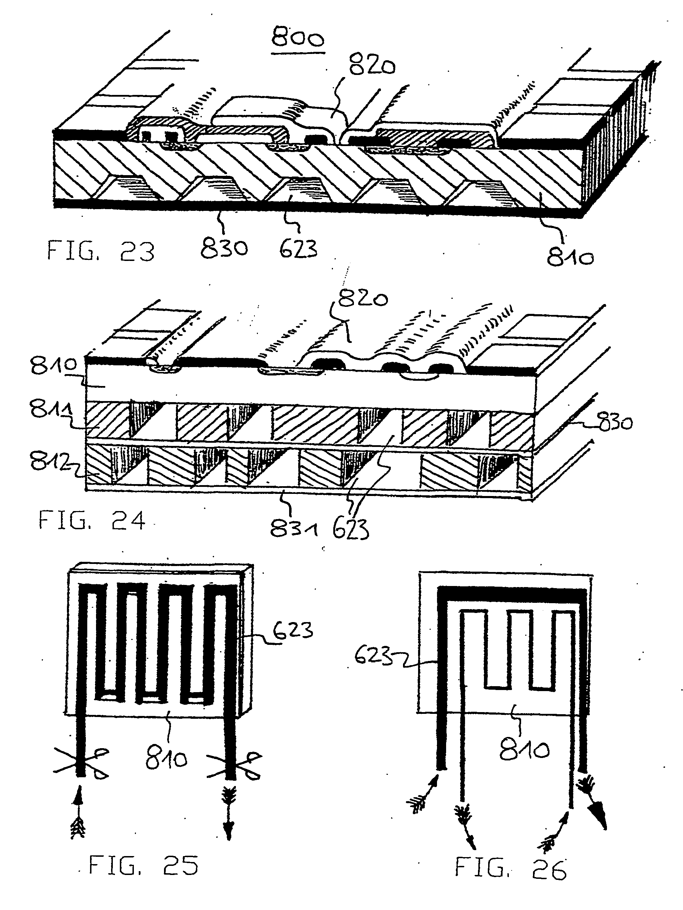

In den Fig. 23 bis 26 sind Kryospeicherelemente 620 (keine Ausführungsformen der Erfindung) gezeigt, bei denen im Unterschied zu den oben beschriebenen Ausführungsformen der Probenträger 621 nicht in eine Verkapselung des Speicherschaltkreises, sondern in dessen Substratmaterial integriert ist. Fig. 23 zeigt beispielsweise einen Teil eines Kryospeicherelements 620 (ohne Verkapselung und ohne Kontaktfüße). Es ist ausschnittsweise ein Speicherschaltkreis 800 mit einem Substrat 810 und integrierten Bauelementen 820 dargestellt. Das Substrat ist beispielsweise ein Halbleiterwafer, wie er üblicherweise zur Herstellung integrierter Schaltkreise verwendet wird. Auf der Oberseite des Substrats 810 sind die Bauelemente 820 mit an sich bekannten Methoden der Halbleitertechnologie prozessiert. Auf der Unterseite des Substrats 810 sind als Probenaufnahmen kanalförmige Probenkammern 623 gebildet, die mit einer Deckschicht 830 verschlossen sind. Die Probenkammern 623 besitzen Ausmaße von beispielsweise 400 µm (Querschnittsdimension) und 20 mm (Länge). Die Probenkammern 623 können auch in einer strukturierten Substratschicht gebildet sein, die auf dem Substrat angeordnet ist (siehe Figur 24). Die Deckschicht 830 besteht aus einem Kunststoffmaterial, Glas oder einem Halbleitermaterial.

Es können auch mehrere Ebenen mit Probenkammern 623 vorgesehen sein, wie dies in Fig. 24 illustriert ist. Auf dem Substrat 810 kann eine erste strukturierte Substratschicht 811 mit Probenkammern 623 und einer ersten Deckschicht 830 vorgesehen sein. Auf der ersten Deckschicht 830 kann mindestens eine weitere strukturierte Substratschicht 812 mit Probenkammern 623 und einer weiteren Deckschicht 831 vorgesehen sein. Bei dieser Variante wird ein vergrößertes Probenvolumen am zugehörigen Probendatenspeicher aufgenommen. Die Befüllung oder Probenaufnahme an den Kryospeicherelementen 620 gemäß den Figuren 23 und 24 erfolgt über Schlauchanschlüsse, die in die Verkapselung der Probendatenträger 622 integriert sind und nach der Verwendung abgeschnitten oder abgeklemmt werden.

In den Figuren 25 und 26 sind verschiedene Geometrien der kanalförmigen Probenaufnahmen 623 in den Substraten 810 schematisch illustriert. Es können beispielsweise mäanderförmige oder U-förmige Kanalformen mit verschiedenen Querschnittsdimensionen vorgesehen sein, die ggf. ineinander verschachtelt angeordnet sind.

Die in den Figuren 14 bis 22 dargestellten Ausführungsformen der Erfindung besitzt eine Reihe von Vorteilen. Das Kryospeicherelement wird durch einen elektronischen Chip gebildet, der als Probendatenspeicher einen elektronisch von außen beschreibbaren und lesbaren Speicher enthält. Eine temperaturabhängige Justage eines Lese-/Schreibkopfes etwa wie bei einem CD-Speicher ist nicht erforderlich. In dem Chip befindet sich mindestens eine Probenaufnahme entsprechend für eine oder mehrere Proben. Der Chip und/oder die Aufnahmefassung können mit einer elektronischen Schaltung zur Ansteuerung zusätzlicher Funktionselemente, Sensoren und/oder Alarmsystemen ausgestattet sein. Der in Figur 14 gezeigte Aufbau kann als dreidimensionales Mehrebenen-Kryosubstrat hergestellt werden, bei dem mehrere Leiterplatten 610 mit einer Vielzahl von Kryospeicherelementen übereinander gestapelt werden.

Die chipförmigen Speicherelemente können problemlos im gefrorenen Zustand von der Leiterplatte entnommen und auf andere Leiterplatten, Messeinrichtungen oder Bearbeitungsstationen übertragen werden, ohne dass die Probendaten verloren gehen. Die Kryospeicherelemente sind von außen elektronisch adressierbar.

Zusätzlich können zur Mehrfachabsicherung die Kryospeicherelemente mit einer oder mehreren Kennungen, automatisch lesbaren oder visuell kontrollierbaren Farbmarkierungen versehen sein. Die Kryospeicherelemente gemäß Figur 15 lassen sich gegenüber den Dimensionen herkömmlicher integrierter Schaltkreise auch weiter miniaturisieren. Bei Miniaturisierung wird eine optische Ansteuerung anstelle der elektrischen Kontaktierung bevorzugt.

Die mindestens eine Leiterplatte eines Speichersubstrates kann mit einem Computer-Bus-System verbunden sein, mit dem eine individuelle Abfrage und Ansteuerung der einzelnen Kryospeicherelemente erfolgt. Die in Figur 15 dargestellte Form von Kryospeicherelementen kann anwendungsabhängig abgewandelt werden (z. B. runde oder mehreckige Probenträger).

Wichtige Merkmale der Erfindung werden im Folgenden zusammengefasst.

Erfindungsgemäße Speichersubstrate kombinieren eine Materialaufnahme mit einer probenspezifischen Datenaufnahme. Während der Tieftemperaturlagerung ist die selektive Entnahme von Material (Zellen, Zellsuspensionen) und das Lesen/Ablegen von Daten und/oder Datenmaterial möglich.

Die Datenidentifizierung wird mehrfach abgesichert, indem die Proben und die Probendatenspeicher an den gleichen oder unmittelbar aneinandergrenzenden Substratpositionen angeordnet sind. Zusätzlich kann das Speichersubstrat gefärbt sein, so dass allein aus der Färbung des Kryospeicherelements und des Grundkörpers festgestellt werden kann, aus welchem Speichersubstrat die jeweilige Probe stammt.

Die Kryospeicherelemente sind leicht desinfizierbar und wiederverwendbar. Sie bilden ferner einen Schutz für die Probendatenspeicher gegenüber den Umgebungsbedingungen bei der erfindungsgemäßen Kryokonservierung.

Es ist ferner möglich, die Grundkörper und Kryospeicherelemente eines Speichersubstrates einheitlich mit einem Farbton oder einem digitalen oder analogen Erkennungsmuster zu versehen, die jederzeit eine eindeutige Zuordnung beider Teile zulässt. Dies besitzt Vorteile für eine automatisierbare optische Kontrolle (z. B. Farb- und Codierungserfassung).

Auf dem erfindungsgemäßen Kryospeicher können erstmals Probendaten in Kilobyte- bis Megabytebereich gespeichert werden. Dies ist insbesondere bei der Speicherung von Messergebnissen von Vorteil.

Während der Nutzungsdauer eines Speichersubstrates können jederzeit Daten ergänzt werden (Datenakkumulation). Auf diese Weise lassen sich alle an den Proben erworbenen Daten bzw. alle ausgeführten Manipulationen, Messungen, Behandlungen oder dergleichen lückenlos probenspezifisch dokumentieren.

Es können spezifische Behandlungen der Proben insbesondere in den Chip-förmigen Speicherelementen selektiv mit einer Prozedurprogrammierung und -speicherung durchgeführt werden. Beispielsweise kann im Rahmen einer Kryokonservierung ein bestimmtes Heiz-, Kühl-, Mess-, Kontroll- und Alarm-/Anzeigeprogramm abgearbeitet und im Progammdatenspeicher dokumentiert werden. Im gefrorenen Zustand können verschiedene Kryospeicherelemente verschiedene Temperatur- oder Messprogramme durchlaufen. Es kann z. B. lokal ein Auftauen ausgelöst werden, um eine Messung an der Probe durchzuführen. Die oben genannten Heizelemente können bei allen Ausführungsformen erfindungsgemäßer Speichersubstrate für eine lokale Erwärmung von Speichermedien verwendet werden. Auf die.Speichermedien kann bei lokaler Erwärmung zugegriffen werden, während die zugehörige Probe im kryokonservierten Zustand verbleibt.

Es kann erfindungsgemäß vorgesehen sein, dass das Speichersubstrat mit einer rein elektronischen Datenbank kombiniert betrieben wird, in der die Probendaten des Speichersubstrates gespiegelt abgelegt sind.

Die Abdeckung der Probenaufnahmen kann teilweise oder vollständig transparent sein. Durch diese Schicht werden optische und andere Messverfahren in die Probenaufnahme eingekoppelt. Beispielsweise können die Proben bildhaft dargestellt werden. Es sind Fluoreszenzmessungen, dielektrische Messungen und/oder Ultraschalldarstellungen möglich.

Eine Kryodatenbank umfasst eine Vielzahl der erläuterten Speichersubstrate, eine Steuereinrichtung und eine Bearbeitungseinrichtung zur Manipulierung der Speichersubstrate und zur Entnahme von Proben.

Die in der vorstehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Verfahren zur Kryokonservierung, bei dem auf einem Kryosubstrat (600) eine Vielzahl von Proben (430) angeordnet und positionsspezifisch Probendaten, die für Merkmale von jeweils einer Probe (430) charakteristisch sind, gespeichert werden, wobei jeweils eine Probe (430) auf einem Probenträger (621) eines Kryospeicherelements (620) angeordnet und die zugehörigen Probendaten in einem Probendatenspeicher (622) des Kryospeicherelements (620) gespeichert werden,
**dadurch gekennzeichnet, dass**
das Kryosubstrat (600) eine Leiterplatte (610) mit einer Vielzahl von Aufnahmefassungen (612) jeweils zur Aufnahme von einem der Kryospeicherelemente (620) umfasst,
jeweils ein Probenträger (621) und ein Probendatenspeicher (622) des Kryospeicherelements (620) ein Verbundbauteil bilden, das zur Probenentnahme von der Leiterplatte (610) lösbar ist,
wobei als das Kryospeicherelement (620) ein Speicherchip mit einem integrierten Schaltkreis, Kontaktelektroden (625) und einer Verkapselung (626) vorgesehen ist, der mit mindestens einem Probenträger (621) zur Aufnahme einer Probe (430) ausgestattet ist, wobei der Probenträger auf einer Oberseite der Verkapselung (626) befestigt oder als Teil der Verkapselung (626) gebildet ist.

2. Verfahren gemäß Anspruch 1, bei dem als Probendaten Informationen zur Identifizierung der Proben, Informationen über Substanzmerkmale der Proben (430), Messergebnisse und/oder Behandlungsschritte gespeichert werden.

3. Verfahren gemäß einem der vorhergehenden Ansprüche, bei dem die Probendaten im gekühlten Zustand der Leiterplatte (610) gelesen und/oder geschrieben werden.

4. Verfahren gemäß einem der vorhergehenden Ansprüche, bei dem eine Probe von der Leiterplatte (610) in Verbindung mit den gespeicherten Probendaten entnommen und auf ein anderes Substrat oder zu einer Meß- oder Behandlungseinrichtung überführt wird.

5. Verfahren gemäß einem der vorhergehenden Ansprüche, bei dem die Proben Suspensionen von mindestens einer Zelle, Zellbestandteilen, Zellaggregaten und/oder Gewebe umfassen.

6. Verfahren gemäß Anspruch 5, bei dem die Proben zusätzlich Referenz- und Sondenproben umfasst.

7. Verfahren gemäß einem der vorgehenden Ansprüche, bei dem an einer gefrorenen, erwärmten oder aufgetauten Probe im gekühlten Zustand der übrigen Leiterplatte (610) eine Messung und/oder eine Behandlung erfolgt und die Messergebnisse als Probendaten gespeichert werden.

8. Verfahren gemäß einem der vorgehenden Ansprüche, bei dem eine Steuerung des Zustandes mindestens einer Probe auf der Leiterplatte (610) mit einem der Probe zugeordneten Rechnerschaltkreis erfolgt.

9. Kryosubstrat zur Kryokonservierung einer Vielzahl von Proben (430), das eine Vielzahl von Kryospeicherelementen (620) enthält, die jeweils durch ein Verbundbauteil (621, 622) aus einem Probenträger (621) und einem Probendatenspeicher (622) gebildet werden,
**dadurch gekennzeichnet dass**
das Kryosubstrat (600) eine Leiterplatte (610) mit einer Vielzahl von Aufnahmefassungen (612) jeweils zur Aufnahme von einem der Kryospeicherelemente (620) umfasst, und
als Kryospeicherelement (620) ein Speicherchip mit einem integrierten Schaltkreis, Kontaktelektroden (625) und einer Verkapselung (626) vorgesehen ist, der mit mindestens einem Probenträger (621) zur Aufnahme einer Probe (430) ausgestattet ist, wobei der Probenträger auf einer Oberseite der Verkapselung (626) befestigt oder als Teil der Verkapselung (626) gebildet ist.

10. Kryosubstrat gemäß Anspruch 9, bei dem jedes Kryospeicherelement lösbar in einem Grundkörper der Leiterplatte (610) angeordnet ist.

11. Kryosubstrat gemäß einem der Ansprüche 9 oder 10, bei dem als Kryospeicherelement ein Formteil vorgesehen ist, das den Probenträger und den Probendatenspeicher umfasst.

12. Kryosubstrat gemäß einem der Ansprüche 9 bis 11, bei dem der Probenträger in den Aufbau des integrierten Schaltkreises integriert ist.

13. Kryosubstrat gemäß Anspruch 12, bei dem der Probenträger einen Kryobehälter aufweist.

14. Kryosubstrat gemäß Anspruch 12, bei dem der Probenträger mindestens eine schlauch-, kapillar- oder kanalförmige Probenkammer aufweist.

15. Kryosubstrat gemäß Anspruch 12, bei dem der Probenträger als kanalförmige Probenaufnahme in einem Substrat des integrierten Schaltkreises vorgesehen ist.

16. Kryosubstrat gemäß Anspruch 12, bei dem das Kryospeicherelement einen Rechnerschaltkreis enthält, mit dem die Funktion des Kryospeicherelements verwaltet wird und über den das Kryospeicherelement nach außen kommuniziert.

## Claims

1. A method for cryo-preservation, in which a plurality of specimens (430) is arranged on a cryo-substrate (600) and specimen data, which are characteristic for features of a respective one of the specimens (430), are stored at specific positions, wherein a respective specimen (430) is arranged on a specimen carrier (621) of a cryo-storage element (620) and the associated specimen data are stored in a specimen data storage (622) of the cryo-storage element (620),
**characterized in that**
the cryo-substrate (600) comprises a circuit board (610) with a plurality of receptacle mountings (612), each for accommodating one of the cryo-storage elements (620), wherein, respectively, a specimen carrier (621) and a specimen data storage (622) of the cryo-storage element (620) form a composite component that is releasable from the circuit board (610) for specimen removal,
wherein a storage chip with an integrated circuit, contact electrodes (625) and an encapsulation (626) are provided as the cryo-storage element (620), said storage chip being provided with at least one specimen carrier (621) for receiving a specimen (430), wherein the specimen carrier is attached at an upper side of the encapsulation (626) or formed as a part of the encapsulation (626).

2. The method according to claim 1, in which as the specimen data, information for identification of the specimens, information about substance features of the specimens (430), measurement results, and/or treatment steps are stored.

3. The method according to one of the preceding claims, in which the specimen data are read and/or written in a cooled state of the circuit board (610).

4. The method according to one of the preceding claims, in which a specimen is removed from the circuit board (610) in connection with the stored specimen data and is transferred onto another substrate or to a measuring or treatment device.

5. The method according to one of the preceding claims, in which the specimens include suspensions of at least one cell, cell components, cell aggregates, and/or tissue.

6. The method according to claim 5, in which the specimens further include reference and probe specimens.

7. The method according to one of the preceding claims, in which, on a frozen, heated or thawed specimen in a cooled state of the remaining circuit board (610), a measurement and/or a treatment takes place and measurement results are stored as specimen data.

8. The method according to one of the preceding claims, in which a control of the state of at least one specimen on the circuit board (610) takes place with a computing circuit associated with the specimen.

9. Cryo-substrate for cryo-preservation of a plurality of specimens (430), which contains a plurality of cryo-storage elements (620), which are formed, respectively, by a composite component (621, 622) from a specimen carrier (621) and a specimen data storage (622),
**characterized in that**
the cryo-substrate (600) comprises a circuit board (610) with a plurality of receptacle mountings (612), each for accommodating one of the cry-storage elements (620), wherein a storage chip with an integrated circuit, contact electrodes (625) and an encapsulation (626) is provided as the cryo-storage element (620), said storage chip being provided with at least one specimen carrier (621) for receiving a specimen (430), wherein the specimen carrier is attached at an upper side of the encapsulation (626) or formed as a part of the encapsulation (626).

10. Cryo-substrate according to claim 9, in which each cryo-storage element is arranged releasably in a base body of the circuit board (610).

11. Cryo-substrate according to one of claims 9 or 10, in which a moulded component is provided as the cryo-storage element, which includes the specimen carrier and the specimen data storage.

12. Cryo-substrate according to one of claims 9 to 11, in which the specimen carrier is integrated in the structure of the integrated circuit.

13. Cryo-substrate according to claim 12, in which the specimen carrier has a cryo-container.

14. Cryo-substrate according to claim 12, in which the specimen carrier has at least one hose-shaped, capillary-shaped, or channel-shaped specimen chamber.

15. Cryo-substrate according to claim 12, in which the specimen carrier is provided as a channel-shaped specimen receptacle in a substrate of the integrated circuit.

16. Cryo-substrate according to claim 12, in which the cryo-storage element contains a computing circuit, with which the function of the cryo-storage element is managed and by means of which, the cryo-storage element communicates externally.

## Revendications

1. Procédé de cryoconservation, où une pluralité d'échantillons (430) sont disposés sur un cryosubstrat (600) et où des données d'échantillon spécifiques aux positions de ceux-ci, révélatrices de caractéristiques de chaque échantillon (430), sont stockées, chaque échantillon (430) étant disposé sur un support (621) d'échantillon d'un élément de stockage cryogénique (620) et les données d'échantillon correspondantes étant stockées dans une mémoire (622) de données d'échantillon de l'élément de stockage cryogénique (620),
**caractérisé**
**en ce que** le cryosubstrat (600) comprend une plaquette imprimée (610) avec une pluralité de réceptacles (612) destinés à recevoir chacun un des éléments de stockage cryogénique (620),
chaque support (621) d'échantillon formant un composant composite avec une mémoire (622) de données d'échantillon de l'élément de stockage cryogénique (620), ledit composant étant amovible de la plaquette imprimée (610) pour un prélèvement d'échantillon,
une puce mémoire avec un circuit intégré, des électrodes de contact (625) et un encapsulage (626) étant prévue comme élément de stockage cryogénique (620), ladite puce mémoire étant équipée d'au moins un support (621) d'échantillon pour la réception d'un échantillon (430), ledit support d'échantillon étant fixé sur une face supérieure de l'encapsulage (626) ou étant réalisé comme une partie de l'encapsulage (626).

2. Procédé selon la revendication 1, où des informations relatives à l'identification des échantillons, des informations sur les caractéristiques substantielles des échantillons (430), des résultats de mesure et/ou des phases de traitement sont stockées comme données d'échantillon.

3. Procédé selon l'une des revendications précédentes, où les données d'échantillon sont lues et/ou écrites en état de refroidissement de la plaquette imprimée (610).

4. Procédé selon l'une des revendications précédentes, où un échantillon est prélevé de la plaquette imprimée (610) en liaison avec les données d'échantillon stockées et transféré sur un autre substrat ou vers un dispositif de mesure ou de traitement.

5. Procédé selon l'une des revendications précédentes, où les échantillons comprennent des suspensions d'au moins une cellule, des composants de cellule, des agrégats cellulaires et/ou des tissus.

6. Procédé selon la revendication 5, où les échantillons comprennent en outre des échantillons de référence et de sonde.

7. Procédé selon l'une des revendications précédentes, où une mesure et/ou un traitement sont effectués sur un échantillon congelé, chauffé ou décongelé en état de refroidissement du reste de la plaquette imprimée (610), et où les résultats de mesure sont stockés comme données d'échantillon.

8. Procédé selon l'une des revendications précédentes, où une commande de l'état d'au moins un échantillon est réalisée avec un circuit de calcul affecté à l'échantillon sur la plaquette imprimée (610).

9. Cryosubstrat pour la cryoconservation d'une pluralité d'échantillons (430) contenant une pluralité d'éléments de stockage cryogénique (620) respectivement formés par un composant composite (621, 622) constitué d'un support (621) d'échantillon et d'une mémoire (622) de données d'échantillon,
**caractérisé**
**en ce que** le cryosubstrat (600) comprend une plaquette imprimée (610) avec une pluralité de réceptacles (612) destinés à recevoir chacun un des éléments de stockage cryogénique (620), et
**en ce qu'**une puce mémoire avec un circuit intégré, des électrodes de contact (625) et un encapsulage (626) est prévue comme élément de stockage cryogénique (620), ladite puce mémoire étant équipée d'au moins un support (621) d'échantillon pour la réception d'un échantillon (430), ledit support d'échantillon étant fixé sur une face supérieure de l'encapsulage (626) ou étant réalisé comme une partie de l'encapsulage (626).

10. Cryosubstrat selon la revendication 9, où chaque élément de stockage cryogénique est disposé de manière amovible dans un corps de base de la plaquette imprimée (610).

11. Cryosubstrat selon la revendication 9 ou la revendication 10, où une pièce moulée est prévue comme élément de stockage cryogénique, laquelle comprend le support d'échantillon et la mémoire de données d'échantillon.

12. Cryosubstrat selon l'une des revendications 9 à 11, où le support d'échantillon est intégré à la structure du circuit intégré.

13. Cryosubstrat selon la revendication 12, où le support d'échantillon comporte un cryorécipient.

14. Cryosubstrat selon la revendication 12, où le support d'échantillon comporte au moins une chambre d'échantillons en forme de tuyau, de capillaire ou de canal.

15. Cryosubstrat selon la revendication 12, où le support d'échantillon est prévu comme réception d'échantillon en forme de canal dans un substrat du circuit intégré.

16. Cryosubstrat selon la revendication 12, où l'élément de stockage cryogénique contient un circuit de calcul au moyen duquel le fonctionnement dudit élément de stockage cryogénique est administré, et par l'intermédiaire duquel ledit élément de stockage cryogénique communique vers l'extérieur.
